# EUROPEAN PATENT APPLICATION

(11) **EP 1 484 923 A1**
(43) Date of publication of application: **08.12.2004**
(21) Application number: 04253243.2
(22) Date of filing: 01.06.2004
(51) Int. Cl.: H04N 7/16, H04N 7/173

(54) **Contract management apparatus for home networks, broadcasting receiving device and information distributing device**

(30) Priority: 02.06.2003 JP 2003157152
(71) Applicant: Kabushiki Kaisha Toshiba, Tokyo 105-8001 (JP)
(72) Inventor: Akiyama, Koichiro Toshiba Corporation, Minato-ku Tokyo 105-8001 (JP); Umesawa, Kentaro, Toshiba Corporation, Minato-ku Tokyo 105-8001 (JP)
(74) Representative: Midgley, Jonathan Lee

(57) **Abstract**

There is disclosed a contract management apparatus (11) connected to a plurality of broadcasting receiving devices which receive encrypted and broadcasted/distributed content information of a plurality of broadcasting channels and a channel key for decrypting the content information via a first network (1). The contract management apparatus (11) receives and stores key information for decrypting the channel key via a second network, and distributes the stored key information in response to a request from the broadcasting receiving devices via the first network (1), until a total value of points indicating a value of the content information decrypted using the key information, a see/hear time, or a combination of these becomes equal to a predetermined upper limit value in the plurality of broadcasting receiving devices.

## Description

The present invention relates to a broadcasting system in which content information (hereinafter referred to simply as pay contents) of a pay program distributed by broadcasting can be seen/heard in accordance with a contract content, particularly to a reception management apparatus for use in the broadcasting system, a broadcasting receiving device, an information distributing device, an information distributing method, and a reception management program.

A digital broadcasting has been expanded not only to a satellite broadcasting but also to a cable broadcasting and a ground wave broadcasting in order to further enhance broadcasting services. Major characteristics of the digital broadcasting lie in that: a use efficiency of a transmission band required for transmission of programs is improved by introduction of an information compression technique and the number of broadcasting channels can largely be increased as compared with an analog broadcasting; it is possible to provide high-quality homogeneous services by application of a sophisticated error correction technique; and not only the broadcasting by an image or sound but also the broadcasting by characters or data (so-called data broadcasting) are possible. Especially in the data broadcasting, for example, it is possible to broadcast news as character data, or to distribute application software of a personal computer or a game apparatus by the broadcasting, and systems for providing the services have appeared one after another.

Moreover, not only a conventional stationary type of a receiving device of the digital broadcasting, but also mobile types such as a portable terminal usable even during movement and a mobile terminal installed in an automobile so as to be usable in the automobile have been developed.

In order to realize pay broadcasting services in the digital broadcasting system, customers need to be managed in accordance with the contract content. In the customer management in accordance with the contract content, for example, the program of the contracted channel is set to be audible only in a period contracted by payment of a predetermined fee. In a realizing method, it is assumed that a pay content is encrypted (content data is scrambled by a predetermined key) and transmitted, a scramble release key is distributed to a subscriber (audience), and the scramble is released from the pay content by the key distributed by a broadcasting receiving device.

The scramble release key is assumed to be issued in accordance with contracted channel and period. Accordingly, even the subscriber who is a customer cannot see/hear a content other than the contracted content. On the other hand, the scramble release key needs to be securely distributed only to legitimate subscribers to prevent people other than the subscribers from illegally seeing/hearing the program by leakage. A method is a general preventive measure in which a master key is prepared for each broadcasting receiving device and distributed to the subscribers beforehand, and contracted information is encrypted by the master key and transmitted via a broadcasting wave.

Here, the contracted information indicates a contract mode including a work key of a channel via which the reception is contracted, viewable/audible channel information, and the like. In the information, the work key is a key inherent in the channel, the encrypted and transmitted key of the corresponding channel can be decrypted. The channel key is used for descrambling the scrambled broadcasting content. That is, the contracted information including the work key encrypted by the master key set for each receiving device is inherent in the receiving device, and the channel key decrypted by the work key is said to be the information common with a plurality of receiving devices.

In a conventional pay broadcasting system, individual information for each receiving device is also transmitted via the broadcasting wave. The reason for this is that a use fee of a dial-up line is expensive, and much cost is therefore required for using the dial-up line in each receiving device to transmit the individual information. The individual information has heretofore been transmitted in an exclusive-use band disposed in a part of a broadcasting band, and the broadcasting band operated with a limited transmission capacity is compressed. Furthermore, since information indicating whether or not a subscriber's receiving device has received the individual information cannot be obtained on a broadcasting station side, transmission has to be repeated for a sufficiently long period.

Furthermore, in a conventional pay broadcasting system, in general, an expiration date of the work key included in the individual information is set for each contract period (usually every month). Therefore, a latest work key has to be sent to each receiving device every set period. This remarkably increases a transmission amount of the individual information, and this also compresses the broadcasting band.

A system which does not include any master key has also been proposed in order to reduce a ratio of the individual information occupying the broadcasting band in consideration of the above-described problem. For example, as described in Jpn. Pat. Appln. KOKAI Publication No. 11-243536, this system is to be realized in satellite broadcastings such as a satellite sound broadcasting for an automobile having an especially narrow band.

In the system described in the publication, the master key common with all the receiving devices is disposed, and a receiving device ID and the contracted information to be set in the receiving device constituting a pair, and the channel key common with all the receiving devices are encrypted with the master key common with all the receiving devices and transmitted. In this case, the work key does not have to be periodically transmitted, and a plurality of pieces of contracted information can be compressed into one packet and transmitted. Furthermore, the contracted information is transmitted only at the time of renewal of the contract. Accordingly, a transmitted information amount can be minimized.

Moreover, at present, a contract unit of the satellite broadcasting has been the receiving device. Even the same subscriber has to subscribe for two receiving devices and pay a subscription fee for two devices, when possessing two receiving devices.
However, in recent years, this situation is slightly modified, and a method is admitted in which the receiving devices in the same household are regarded as one receiving device and charged as in BS digital broadcasting. However, since the same content can be seen/heard via a plurality of receiving devices in the household at the same time in this system, a problem that the system is not suitable for distribution of the content having a high added value has been pointed out.

On the other hand, the distribution of the contracted information or the work key via the dial-up line has heretofore been avoided for reasons that the use fee of the dial-up line is expensive. However, in recent years, speeding-up and cost reduction of the dial-up line have been advanced, and continuous connection with internet providers has also been realized. In this situation, a local area network (LAN) is laid in a dwelling unit, and products connectable to LAN are sold as not only a personal computer installed in the dwelling unit but also household electric appliances such as a refrigerator, an air conditioner, and a video recorder.

These household electric appliances are connectable to a continuous connection line or the dial-up line via the LAN, and residents of the dwelling unit can use PC or cellular phones to operate the household electric appliances from places where the residents have gone. This in-house LAN is also called a home network. A server usually called a home server which generally controls the household electric appliances in the dwelling unit is disposed in a contact point of the home network with communication means such as the continuous connection line and dial-up line.

With this change of environment, in recent years, a broadcasting receiving device connectable to the home network has also been provided. However, since the home network is connectable to the arbitrary number of broadcasting receiving devices, a problem arises in collection of the subscription fee. That is, when content information is seen/heard via a plurality of broadcasting receiving devices connected to the home network, it is remarkably difficult to carefully collect the subscription fee in accordance with a value of the content information seen/heard via the plurality of devices, a see/hear time, a combination of these, or the number of see/hear devices.

An object of the present invention is to provide a reception management apparatus, a broadcasting receiving device, an information distributing device, an information distributing method, and a reception management program in which subscription fees can securely be collected in accordance with a value of content information seen/heard by a plurality of receiving devices, a see/hear time, a combination of these, or the number of see/hear receiving devices in a case where the content information is seen/heard by the plurality of receiving devices connected to LAN such as a home network.

In an aspect of the present invention, there is provided a contract management apparatus (11) for use in a broadcasting system including one or more receivers (100 to 107) which receive encrypted contents from a broadcasting network (23), and a contract management server (21) which manages use of the contents in accordance with a contract content, the contract management apparatus (11) connected to the one or more receivers (100 to 107) and the contract management server (21) via separate networks, the apparatus (11) characterized by comprising:
a first acceptance unit (201) configured to accept contract information including a consent to use of the contents, use conditions and decryption information. distributed from the contract management server (21);
a first memory (202) in which the contract information and the decryption information are stored;
a second acceptance unit (203) configured to accept a request for the decryption information required to decrypt the encrypted contents, the request transmitted from at least one of the receivers (100 to 107);
a distribution unit (203) configured to distribute the decryption information to the at least one of the receivers which requests the decryption information;
an information generation unit (202) configured to generate use situation information based on any of a value of the contents, a use time thereof, a number of receivers to which the decryption information has been distributed, and a combination of them, the contents being decrypted by the distributed decryption information in response to the request for the decryption information;
a second memory (204) in which the use situation information is stored;
a determination unit (202) configured to determinate whether or not the consent to use of the contents is permitted based on the contract information and the use situation information in response to the request for the decryption information; and
a control unit (202) configured to control distributing of the decryption information by the distribution unit (203) based on a determinate result of the determination unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a constitution example of channel contract information;
FIG. 2 is a diagram showing a key structure in a limited reception system according to a first embodiment of the present invention;
FIG. 3 is a diagram showing a schematic constitution example of the whole limited reception system according to the first embodiment;
FIG. 4 is a diagram showing a constitution example of a content packet;
FIG. 5 is a diagram showing the constitution example of a first common limited reception packet;
FIG. 6 is a diagram showing the constitution example of a second common limited reception packet;
FIGS. 7A and 7B are diagrams showing the constitution example of a first individual limited reception packet;
FIG. 8 is a diagram showing the constitution example of a second individual limited reception packet;
FIG. 9 is a diagram showing the constitution example of a broadcasting receiving device;
FIG. 10 is a flowchart showing a processing operation of the broadcasting receiving device;
FIG. 11 is a flowchart showing the processing operation of the broadcasting receiving device;
FIG. 12 is a flowchart showing the processing operation of the broadcasting receiving device;
FIG. 13 is a flowchart showing the processing operation of the broadcasting receiving device;
FIG. 14 is a flowchart showing the processing operation of the broadcasting receiving device;
FIG. 15 is a flowchart showing the processing operation of the broadcasting receiving device;
FIG. 16 is a diagram showing another constitution example of the broadcasting receiving device;
FIG. 17 is a flowchart showing the processing operation of the broadcasting receiving device of FIG. 16;
FIG. 18 is a flowchart showing the processing operation of the broadcasting receiving device of FIG. 16;
FIG. 19 is a flowchart showing the processing operation of the broadcasting receiving device of FIG. 16;
FIG. 20 is a diagram showing the constitution example of a contract management apparatus;
FIG. 21 is a flowchart showing the processing operation (time key output management processing) of the contract management apparatus;
FIG. 22 is a flowchart showing the processing operation (time key output management processing) of the contract management apparatus;
FIG. 23 is a diagram showing a concrete example of a record stored in a time key DB of the contract management apparatus;
FIG. 24 is a diagram showing the constitution example of a time key information packet transmitted to the receiving device from the contract management apparatus;
FIG. 25 is a flowchart showing the processing operation (time key input processing operation) of the contract management apparatus;
FIGS. 26A and 26B are diagrams showing the constitution example of the time key information packet transmitted to the contract management apparatus from a contract management server;
FIG. 27 is a flowchart showing the processing operation (management apparatus contract information input processing operation) of the contract management apparatus;
FIG. 28 is a diagram showing the constitution example of a management apparatus contract information packet;
FIG. 29 is a diagram showing the constitution example of a contract management server;
FIG. 30 is a flowchart showing the processing operation (time key distribution processing operation) of the contract management server;
FIG. 31 is a flowchart showing the processing operation (time key distribution processing operation) of the contract management server;
FIG. 32 is a flowchart showing the processing operation (distribution processing operation of management apparatus contract information) of the contract management server;
FIG. 33 is a flowchart showing the processing operation (distribution processing operation of the management apparatus contract information) of the contract management server;
FIG. 34 is a flowchart showing the processing operation (see/hear history information collection processing operation) of the contract management server;
FIG. 35 is a flowchart showing the processing operation (see/hear history collation processing operation) of the contract management server;
FIG. 36 is a diagram showing the constitution example of a see/hear history information packet;
FIG. 37 is a diagram showing another key structure in the limited reception system;
FIG. 38 is a diagram showing the key structure in the limited reception system according to a second embodiment of the present invention;
FIG. 39 is a diagram showing a schematic constitution example of the whole limited reception system according to the second embodiment;
FIG. 40 is a diagram showing the constitution example of a broadcasting receiving device;
FIG. 41 is a flowchart showing the processing operation of the broadcasting receiving device of FIG. 40;
FIG. 42 is a flowchart showing the processing operation of the broadcasting receiving device of FIG. 40;
FIG. 43 is a flowchart showing the processing operation of the broadcasting receiving device of FIG. 40;
FIG. 44 is a flowchart showing the processing operation of the broadcasting receiving device of FIG. 40;
FIG. 45 is a flowchart showing the processing operation of the broadcasting receiving device of FIG. 40;
FIG. 46 is a diagram showing the constitution example of a channel key information packet;
FIG. 47 is a diagram showing the constitution example of the contract management apparatus; and
FIG. 48 is a diagram showing the constitution example of the contract management server.

Embodiments of the present invention will hereinafter be described with reference to the drawings.

First, terms for use in the following description will be described.

Some reception limitation such as encryption performed with respect to reception of broadcasting contents to permit only a normal subscriber to see/hear the broadcasting contents will generically be referred to as limited reception. A method in which the limited reception is realized will generically be referred to as a limited reception method, and a mechanism in which the limited reception is realized will be referred to as a limited reception system.

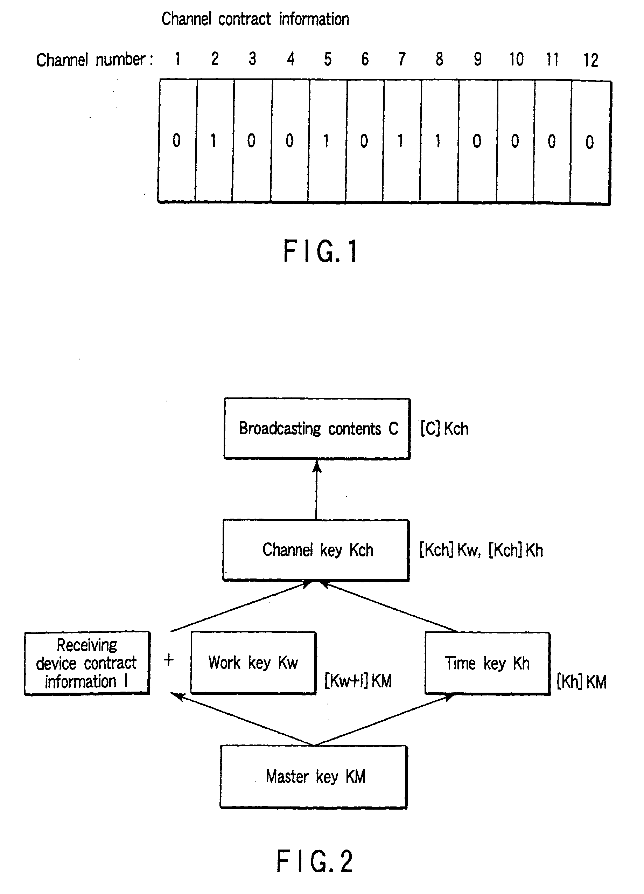

Information in which a contract state for each channel is described in order to perform the limited reception will be referred to as channel contract information. For example, when channels are numbered, a bit string indicating the contract state of the channel depending on whether or not a bit corresponding to the channel number is "1" as shown in FIG. 1 is channel contract information. FIG. 1 shows that second, fifth, seventh, and eighth channels are contracted.

Information which limits channel contract information such as an expiration date of the channel contract information, or information representing a subscriber's contract mode in more detail is added to the channel contract information to constitute contract information for a receiving device. The contract information for the receiving device will be referred to as receiving device contract information.

Limited reception information for the subscriber by each receiving device, such as the receiving device contract information, will be referred to as individual limited reception information, and the limited reception information common with all subscribers, such as channel key information, will be referred to as common limited reception information. For the sake of simplicity, these will be referred to as individual information and common information, respectively, in a context clarifying that the information is the limited reception information.

Hardware in which a mechanism of the limited reception is realized in the receiving device through the following embodiments will be referred to as a limited reception device. Since the limited reception device includes confidential information for the limited reception, a tamper resistant structure is assumed with respect to an inner memory or hardware constitution. In the structure, information is not easily readable, writable, or changeable.

Moreover, in the following embodiments, it is assumed that the receiving device installed in each subscriber's house is connected to a home network. The home network is sometimes connected to one receiving device or a plurality of receiving devices. The home network is connected to not only one or a plurality of (in general, a plurality of) receiving devices but also an apparatus which manages a see/hear contract for seeing/hearing a pay broadcasting in the devices, and this will be referred to as a contract management apparatus. The contract management apparatus is connected to a contract management server via a dial-up line constantly or if necessary. Contract information is transmitted to the contract management apparatus from a contract management server. The contract information is separate from the receiving device contract information, and relates to the seeing/hearing by all the receiving devices connected to the home network, whereas the receiving device contract information is the contract information for one receiving device. It is to be noted that the contract information for the contract management apparatus will be referred to as management apparatus contract information.

By the management apparatus contract information, for example, the seeing/hearing of the content information using a time key is managed in each receiving device connected to the home network. Examples of the information include the number of points indicating an upper limit value of total numeric values corresponding to a value of content information seen/heard by a time key with each receiving device, a see/hear time, and a combination of the value and time. The number of points a numeric value given in accordance with an amount of money paid to a broadcasting station side by the subscriber in addition to the see/hear contract with respect to each receiving device. In a user mode of point information, for example, the predetermined number of points is subtracted from the given number of points, when program contents of a certain channel is seen/heard in any receiving device connected to the home network, or every see/hear of the certain channel for one unit time (e.g., one point is subtracted every see/hear of the certain channel for one hour with any receiving device), and the contents can be seen/heard until the number of points finally turns to "0". The content information of the program can be seen/heard in accordance with the amount of money paid beforehand by this mode. Moreover, one point or several points may also be subtracted every time one certain program is seen/heard (when the program is seen/heard for a predetermined time or more regardless of the see/hear time).

In each receiving device on the network, even the contents of the channel which cannot be seen/heard with the receiving device contract information (channel contract information) given to the receiving device can be seen/heard within a range determined by the management apparatus contract information.

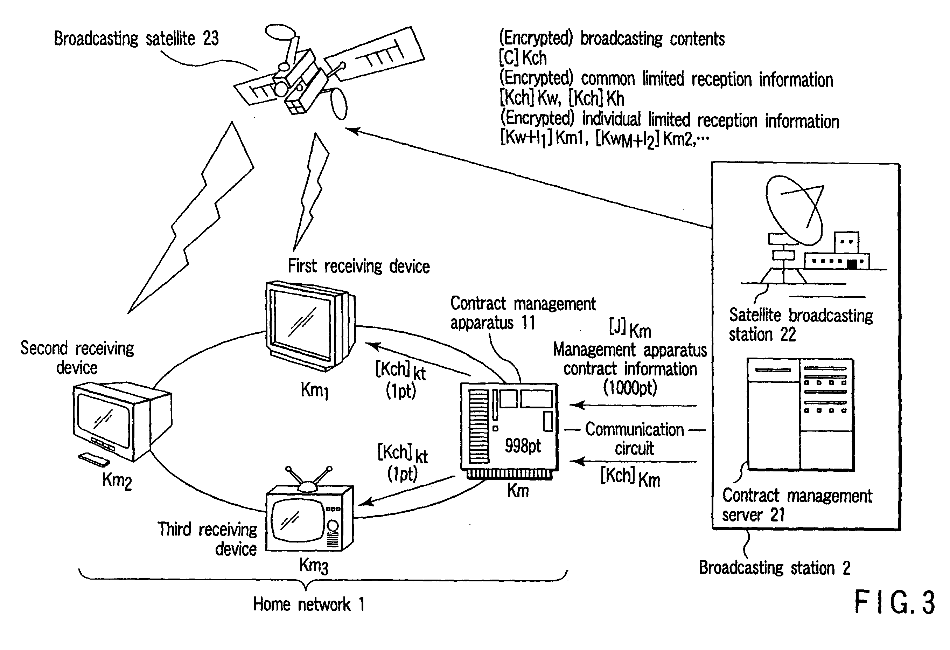

That is, as shown in FIG. 3, key information (e.g., time key) distributed from a contract management apparatus 11 can be used to see/hear the contents in a plurality of receiving devices connected to the contract management apparatus 11. Any management apparatus contract information may be used as long as actual see/hear results can objectively be measured in order to collect subscription fees in accordance with the actual see/hear results using the key information (e.g., the time key) distributed from the contract management apparatus 11 by a plurality of receiving devices on the home network (e.g., the value or see/hear time of the program contents seen/heard by the key information (e.g., the time key) distributed from the contract management apparatus 11).

The program contents of the channel designated in the receiving device contract information by the receiving device can be seen/heard in each receiving device connected to the home network. However, even the content information which cannot be seen/heard with the receiving device contract information can be seen/heard using the time key in the range designated in the management apparatus contract information.

In the contract management apparatus 11, the time key is distributed to the receiving device in response to the request from each receiving device until the total of the numeric values corresponding to the value or see/hear time of the content information seen/heard by the time key in each receiving device connected to a home network 1 becomes equal to a predetermined upper limit value. For example, the number of points is determined beforehand with respect to one time key in accordance with the value of the contents decodable with the time key, and the total number of points corresponding to the time key distributed to each receiving device. It is to be noted that when a plurality of the same time key are permitted to be distributed to the plurality of receiving devices, the same content information may also be seen/heard with the plurality of receiving devices. In this case, the number of points of the time key corresponding to the number of distributed time keys may be added. As a result, in each receiving device on the home network, the subscription fees can securely be collected in accordance with the value or see/hear time of the content information seen/heard with the time key, or the number of receiving devices in a case where the same content information is seen/heard with a plurality of receiving devices.

That is, when the same contents are received by a plurality of receiving devices on the home network, the same key information (e.g., the time key) may be distributed to the plurality of receiving devices, respectively. In this case, when the number of points is subtracted in accordance with the number of key information distributed to each receiving device, the charging is possible in accordance with the value or see/hear time of the contents seen/heard using the key information in each receiving device, or the number of receiving devices.

### 1. First Embodiment

### 1.1 Constitution of the Whole System

A first embodiment relates to a system for distributing a key to decrypt encrypted content decrypt key information (channel key) to each receiving device from the contract management apparatus. Here, the present invention is applied to a limited reception system in which the respective receiving devices have individual master keys. This will remarkably conceptually be described in the embodiment, and conforms to standards of the limited reception of CS or BS broadcasting (ARIB STD-B25) or standards of the receiving device (ARIB STD-B21).

The limited reception system of the present embodiment uses a key constitution shown in FIG. 2. That is, a work key Kw common with all the receiving devices and receiving device contract information I determined for each channel are encrypted and transmitted with a master key Km of each receiving device. Furthermore, the work key Kw is used to encrypt and transmit a channel key Kch for each channel. The broadcasting contents are encrypted using the channel key Kch in a common key encryption system, and can be decrypted with this channel key.

The channel key has to be changed in a short time of usually about one second in order to prevent decryption. Therefore, when the individual master keys are used for transmitting the channel key, a transmission amount becomes enormous. Therefore, in the present embodiment, the work key Kw common with all the receiving devices, and a time key Kh for pay per hour (PPH) see/hear are used to encrypt the channel key with the work key Kw and time key Kh and distribute the channel key.

It is to be noted that the contract management apparatus and receiving device connected to one home network have different master keys. The master key of the contract management apparatus is denoted with Km, and the master key of the receiving device is denoted with Kmi. When both the keys do not have to be especially distinguished from each other, the keys will be referred to as the master key Km.

The work key is updated by a contract period unit (usually about one month) determined by each channel. The time key is effective only in a time zone determined by channel, for example, a predetermined one hour on a time axis such as 13:00 to 14:00 on February 2, 2003. The work key has also heretofore been used in CS or BS broadcasting, but the time key has not been used in a conventional broadcasting.

In the present embodiment, the time key Kh of the channel designated by the contract with the subscriber is encrypted with the master key Km inherent in the contract management apparatus disposed in the subscriber's house, and distributed to the contract management apparatus of the subscriber's house from the contract management server via communication, for example, all for one month, when a contract period unit is one month, or before update of the time key, or in response to the request from the contract management apparatus. The contract management apparatus distributes the time key to the receiving device connected to the contract management apparatus via the home network.

In this manner, the channel key is encrypted with the work key which is updated by the contract period unit (usually about one month) and which is common with all the broadcasting receiving devices, and broadcasted/distributed to each broadcasting receiving device. Moreover, the channel key is encrypted with the time key corresponding to the channel designated by the contract with the subscriber, and distributed to the contract management apparatus disposed in the subscriber's house via communication. Accordingly, the seeing/hearing of the pay broadcasting in each of the plurality of (broadcasting) receiving devices connected to the home network can be managed.

Next, the whole constitution of the limited reception system of the present embodiment will be described with reference to FIG. 3.

In FIG. 3, the limited reception system is roughly constituted of the home network (LAN) 1 in the subscriber's house, and a broadcasting station 2 which distributes program information by channel (content information) or key information to the subscriber's side.

The home network 1 is connected to a plurality of (three herein) receiving devices (first to third receiving devices), and the contract management apparatus 11. The first to third receiving devices have master keys inherent in the respective devices, and the keys are denoted with Km1, Km2, Km3. The contract management apparatus 11 also has a master key inherent in the contract management apparatus 11, and the key is denoted with Km.

The broadcasting station 2 includes a contract management server 21, and a satellite broadcasting station 22. The contract management server 21 is connected to the each subscriber's contract management apparatus 11 via a communication circuit on a public network, in response to the request from the contract management apparatus 11, or continuously, and distributes the management apparatus contract information or the time key to each contract management apparatus 11. The satellite broadcasting station 22 sends encrypted broadcasting contents [C]Kch encrypted with the channel key Kch, common limited reception information including a channel key [Kch]Kw encrypted with the work key Kw, common limited reception information including a channel key [Kch]Kh encrypted with the time key Kh, a work key encrypted with the master key Kmi for each receiving device (i = 1 to 3, that is, the master keys corresponding to the first to third receiving devices are denoted with Km1, Km2, Km3), and individual limited reception information including receiving device contract information Ii for each receiving device (i = 1 to 3, that is, the receiving device contract information corresponding to the first to third receiving devices are denoted with I1, I2, I3) [Kw+Ii]Kmi toward a broadcasting satellite 23 in order to broadcast/distribute the information into each receiving device. The broadcasting satellite 23 sends each information transmitted from the satellite broadcasting station 22 to a broadcasting range of the satellite broadcasting.

It is to be noted that the first to third receiving devices will be referred to simply as the receiving device or the broadcasting receiving device, when the devices do not have to be especially distinguished.

Each receiving device selects the information for the device from the individual limited reception information transmitted from the satellite broadcasting station 22 via the broadcasting satellite 23 to decrypt the information with the master key Kmi of the device.

The work key (or a bunch of work keys (work key group)) and receiving device contract information obtained as a result of decryption are stored in a nonvolatile memory of the receiving device.

When the program contracts of a specific time zone of a specific channel are seen/heard with each receiving device, first it is checked by the stored receiving device contract information whether or not the see/hear contract of the corresponding channel is made. Here, when the see/hear contract is not made, the contract management apparatus 11 is requested to output the time key Kh.

In response to this request, the contract management apparatus 11 refers to management apparatus contract information J held by the contract management apparatus 11 to determine whether or not to permit the output of the time key. With the permission, the contract management apparatus 11 shares the key with the receiving device which has requested for the output of the time key, and encrypts the time key with a shared key Kt (this is represented by [Kh]Kt) to output the key to the receiving device. When the output of the time key is not permitted, the contract management apparatus 11 transmits a message indicating this to the receiving device that has requested for the output of the time key. On the receiving device side, a message indicating that the seeing/hearing is impossible is displayed.

When the program contents of the specific time zone of the specific channel can be seen/heard in the receiving device, the work key or the time key corresponding to the channel is taken out of a work key storage unit or a time key storage unit. When the common limited reception information corresponding to the channel is received, the work key or the time key is used to decrypt the encrypted common limited reception information, and the channel key of the corresponding channel is acquired.

In the present embodiment, there are two types of common limited reception information: the information encrypted with the work key; and the information encrypted with the time key. Therefore, when the work key is stored, the packet of the former is acquired and decrypted. When the time key is stored, the packet of the latter is acquired and decrypted.

When the acquisition of the channel key is successful, the encrypted broadcasting contents of the channel are decrypted to output the broadcasting contents.

The contract management apparatus 11 is connected to the contract management server 21, for example, constantly via communication circuits such as the dial-up line. The contract management apparatus 11 receives the management apparatus contract information J encrypted by the master key Km of the contract management apparatus 11 ([J]Km) from the contract management server 21.

For example, the management apparatus contract information J limits at least one of sum of worth of the seen/heard content information and the number of broadcasting receiving devices for seeing/hearing the same content information with a plurality of broadcasting receiving devices, and may also be the number of points expressing these information. Details of the management apparatus contract information will be described later. Here, for the sake of simplicity of the description, the management apparatus contract information which is the number of points will be described.

For example, the contract management apparatus 11 receives 1000 points as the management apparatus contract information J from the contract management server 21 once a month. The points are stored in the nonvolatile memory in the contract management apparatus 11.

When any receiving device existing in the home network 1 is in a see/hear state, the contract management apparatus 11 constantly acquires the time key Kh from the contract management server 21. Here, the time key is encrypted by the master key Km of the contract management apparatus 11, and transmitted from the contract management server 21, and the contract management apparatus 11 decrypts the time key by the master key Km held in the apparatus.

When there is a request for the output of the time key from the receiving device connected to the home network 1, the contract management apparatus 11 refers to the management apparatus contract information J to judge whether or not the time key of the channel requested to be outputted may be outputted. Here, for permission/prohibition of the output of the time key, for example, when the number of points to be subtracted in outputting the time key requested to be outputted (the number of points predetermined in accordance with the content information decrypted by the channel key decrypted by the time key) is one point, "1" is subtracted from the number of remaining points stored in a management apparatus contract information storage unit to obtain 999 points. When there is a request for the output from another receiving device, "1" is further subtracted to obtain 998 points. When the calculation is performed in this manner, and the number of remaining points at the time of the request for the output of the time key is larger than that of points corresponding to the time key to be outputted, the output is permitted. When the number is smaller, the output is prohibited.

When the time key of the channel is permitted to be outputted in response to the request for the output from the receiving device, the time key is encrypted with the key Kt shared by the contract management apparatus 11 and the receiving device that has requested for the output of the time key of the channel, and transmitted to the receiving device via the home network.

In the present embodiment, when the content other than the program contents that have already been capable of be seen/heard by the receiving device contract information of the receiving device is seen/heard in each receiving device, the time key for seeing/hearing the content is required from the contract management apparatus 11. Every time the contract management apparatus 11 distributes the time key to each receiving device that has requested for the time key, the point value corresponding to the time key (corresponding to the content information decrypted by the channel key capable of being decrypted by the time key) is subtracted from the given number of points. In each receiving device connected to the home network, even the desired content other than the program contents capable of being seen/heard by the receiving device contract information can be seen/heard for a desired time until the point number turns to "0".

The outline of the limited reception system (broadcasting system) of the present embodiment has been described above. It is to be noted that mutual authentication is required between the receiving device and the contract management apparatus 11 and between the contract management apparatus 11 and the contract management server 21.

Moreover, the present system is a model in which the contract management apparatus 11 substantially managing the contract is reliable. Therefore, if the contract management apparatus 11 is attacked, and all the time keys spread in the world, a situation where the pay broadcasting is not established is also predicted.

To solve the problem, in the present embodiment, a mechanism is introduced in which a see/hear history of each receiving device connected to the home network 1 (in a case where the key information (e.g., the time key) outputted from the contract management apparatus 11 is used) is periodically transmitted to the contract management server 21 to check whether or not the content is seen/heard more than contracted. If illegal see/hear is found by this means, it is determined that the time key should not be transmitted to the contract management apparatus 11 managing the receiving device thereafter to solve the above-described problem.

Each device of the present system will hereinafter be described in detail.

### 1.2 Receiving Device

The broadcasting receiving device (receiving device) in the limited reception system of the present embodiment shown in FIG. 3 receives three types of data: a content packet for distributing the broadcasting content; a common limited reception packet for distributing the common limited reception information; and an individual limited reception packet for distributing the individual limited reception information.

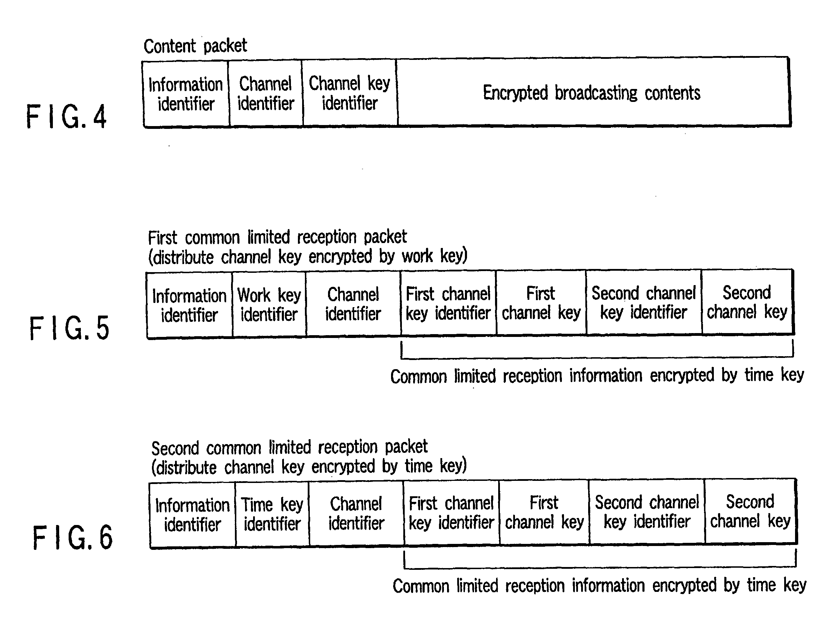

The content packet includes a packet form shown in FIG. 4, and is constituted of an information identifier, a channel identifier, a channel key identifier, and encrypted broadcasting contents. The information identifier indicates the type of the packet, and an identifier indicating the content packet is described. The channel identifier indicates the channel including the broadcasting contents. The channel key identifier indicates the identifier of the channel key for decrypting the broadcasting contents. The broadcasting contents indicate raw program data, and are encrypted by the channel key Kch designated by the channel key identifier. It is to be noted that for the simplicity of the description, all the information in the packet is assumed to be data represented by a fixed length unless especially mentioned.

The common limited reception packet distributes the channel key corresponding to a certain channel which is one packet. There are a common limited reception packet (first common limited reception packet) constituted to distribute the channel key encrypted by the work key as shown in FIG. 5, and a common limited reception packet (second common limited reception packet) constituted to distribute the channel key encrypted by the time key as shown in FIG. 6.

The first common limited reception packet shown in FIG. 5 is constituted of an information identifier, work key identifier, channel identifier, first channel key identifier, first channel key, second channel key identifier, and second channel key. A portion including the first channel key identifier to the second channel key is encrypted by the work key specified by the work key identifier. The information identifier indicates the type of the packet, and the identifier indicating the common limited reception packet encrypted by the work key is described here. The channel identifier indicates the channel to which the common limited reception information belongs. The work key identifier is information indicating the work key Kw by which the common limited reception information is encrypted. The channel key identifier is an identifier of the next described channel key. The channel key indicates the channel key usable in decrypting the broadcasting contents of the channel designated by the channel identifier.

Here, two sets of channel key identifiers and channel keys exist. This is because, as described above, since the channel key is changed in a comparatively short time, the presently used channel key and the channel key to be used next are simultaneously sent for a necessity of smoothly switching the channel key. Needless to say, the transmission of two sets does not directly influence the present embodiment, one set is sufficient.

In the second common limited reception packet shown in FIG. 6, the portion of the work key of the first common limited reception packet of FIG. 5 is replaced with that of the time key. Moreover, the portion including the first channel key identifier to the second channel key is encrypted by the time key specified by the time key identifier.

For the individual limited reception packet, there are a first individual limited reception packet which distributes receiving device contract information and work key for each receiving device via a broadcasting wave, and a second individual limited reception packet which distributes management apparatus contract information for the contract management apparatus via a communication circuit.

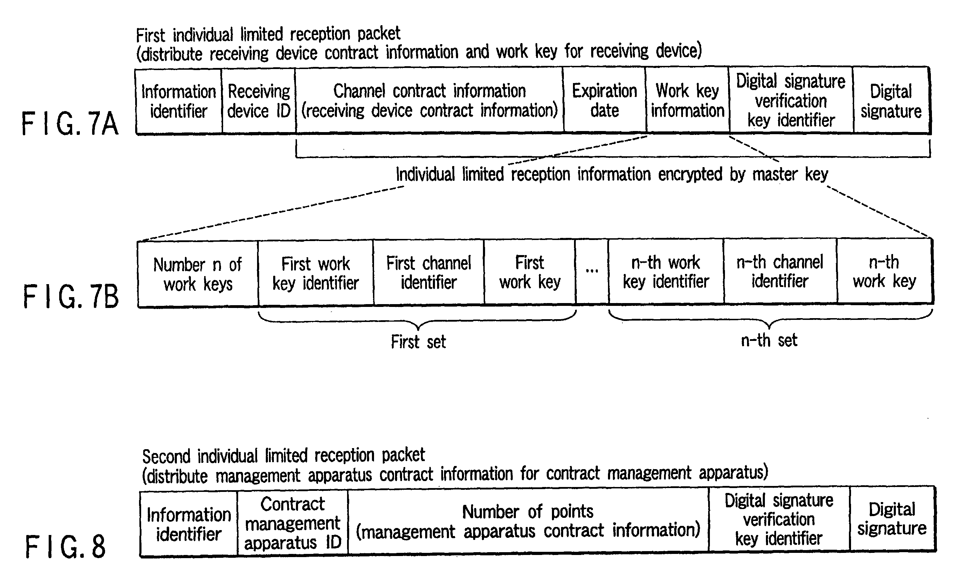

As shown in FIG. 7A, the first individual limited reception packet is constituted of an information identifier, receiving device ID, channel contract information, expiration date, work key information, digital signature verification key identifier, and digital signature. The information identifier indicates the type of the packet, and the identifier indicating the individual limited reception packet for the receiving device is described here. The receiving device ID is identification information of the receiving device capable of decrypting the individual limited reception packet. The channel contract information is receiving device contract information corresponding to the receiving device having the receiving device ID. The expiration date is the expiration date of the channel contract information.

The work key information includes a structure shown in FIG. 7B. That is, the information is constituted of the number n of work keys, and n sets each including a channel identifier, work key identifier, and work key. The number n of work keys indicates that n pieces of information constituted of the channel identifier, work key identifier, and work key continue. Here, the channel identifier is the identifier of the channel in which the work key is used. The work key identifier is an ID of the work key, and this work key identifier is referred to, when decrypting the encrypted portion in the first common limited reception packet shown in FIG. 5.

In the individual limited reception packet of FIG. 7A, the digital signature verification key identifier indicates the identifier of the key for verifying the next digital signature. The digital signature is information for confirming validity of the receiving device contract information or work key information, and is for use mainly in preventing forgery or in detecting a reception error.

As shown in FIG. 8, the second individual limited reception packet is constituted of an information identifier, contract management apparatus ID, the number of points which is the management apparatus contract information, digital signature verification key identifier, and digital signature. The information identifier indicates the type of the packet, and the identifier indicating the individual limited reception packet for the contract management apparatus is described here. The contract management apparatus ID is identification information of the contract management apparatus capable of decrypting the individual limited reception packet. The number of points is the management apparatus contract information corresponding to the contract management apparatus having the contract management apparatus ID. The digital signature verification key identifier indicates the identifier of the key for verifying the next digital signature. The digital signature is information for confirming the validity of the management apparatus contract information, and is for use mainly in preventing the forgery or in detecting the reception error.

It is to be noted that all the information is data represented by the fixed length in the present embodiment.

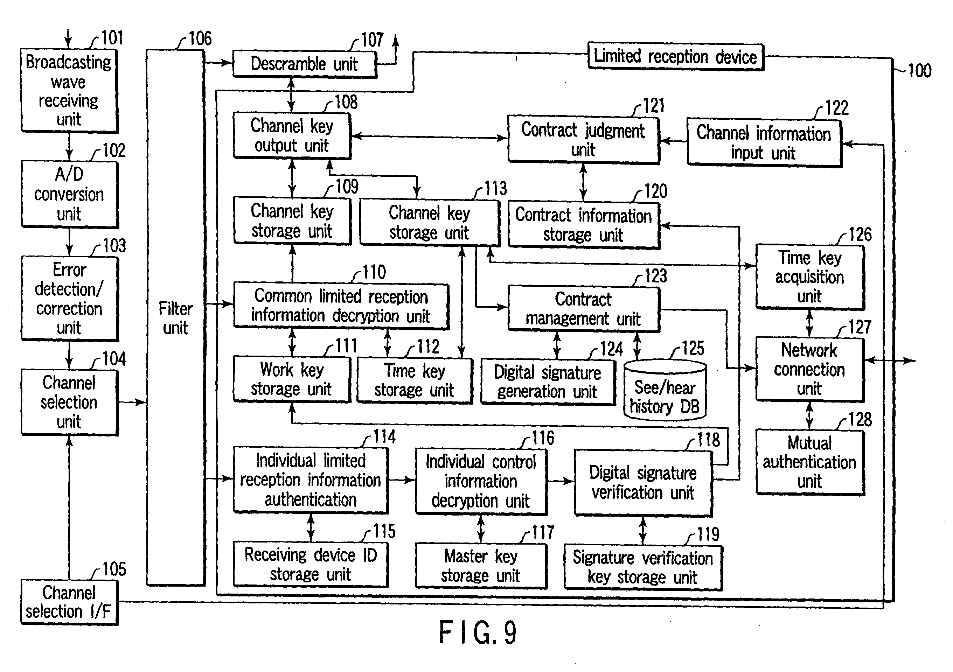

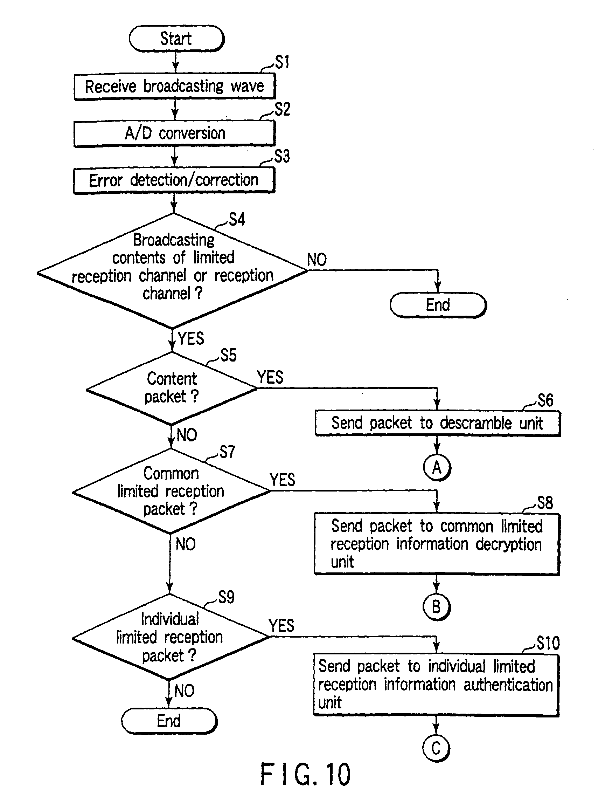

Next, a constitution and processing operation of the broadcasting receiving device (receiving device) of the present embodiment will be described with reference to the whole constitution diagram shown in FIG. 9 along with flowcharts shown in FIGS. 10 to 15.

The receiving device receives a broadcasting wave via a broadcasting receiving unit 101 (step S1 of FIG. 10), and converts an analog signal to digital data in an A/D conversion unit 102 (step S2). The digital data is sent to an error detection/correction unit 103 to perform error detection/correction (step S3). Thereafter, with the limited reception channel for distributing broadcasting packets such as the content packet of the reception channel, individual limited reception packet, or common limited reception packet (here, the first common limited reception packet) (step S4), the information identifier of each broadcasting packet is referred to in judging any of the individual limited reception packet, common limited reception packet, and content packet, and the processing is accordingly branched and advanced as follows. When the content packet, the individual limited reception packet or common limited reception packet is not received in the step S4, the processing is stopped.

With the content packet (step S5), the channel being seen/heard is obtained via a channel selection I/F 105, and only the see/hear channel is transmitted to a filter unit 106 by a channel selection unit 104. The filter unit 106 sends the channel to a descramble unit 107 (step S6).

The channel selection I/F 105 is for a user who is an audience to set a channel number to be seen/heard.

With the common limited reception packet (step S7), the packet is sent to a common limited reception information decryption unit 110 of a limited reception device 100 via the channel selection unit 104 and filter unit 106 to start the decryption (step S8).

With the individual limited reception packet (step S9), the packet is sent to an individual limited reception information authentication unit 114 of the limited reception device 100 via the channel selection unit 104 and filter unit 106 (step S10).

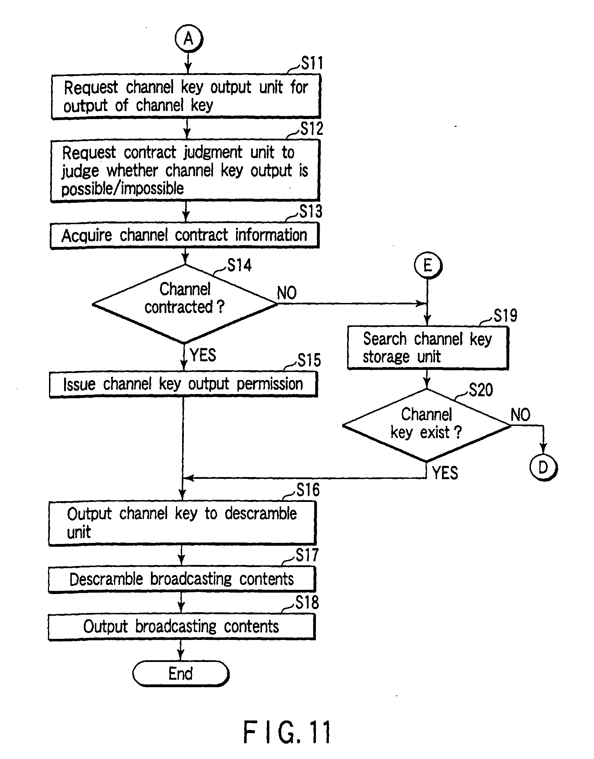

Next, the processing concerning the content packet will be described in detail with reference to the flowcharts of FIGS. 11 to 13. The content packet sent to the descramble unit 107 from the filter unit 106 in the step S6 of FIG. 10 transmits the channel and channel key identifiers to a channel key output unit 108 of the limited reception device 100 to request for the output of the channel key (step S11).

In the limited reception device 100, the channel key output unit 108 first uses the channel identifier as the key to confirm whether or not the channel is see/hear-contracted with respect to a contract judgment unit 121 (step S12). The contract judgment unit 121 refers to the channel contract information (receiving device contract information) stored in a contract information storage unit 120 and shown in FIG. 1 (step S13) to judge whether or not the channel corresponding to the received channel identifier is see/hear-contracted (step S14). When the channel corresponding to the channel identifier is judged to be capable of being seen/heard (step S15), the channel key output unit 108 uses the channel and channel key identifiers as the key to search a channel key storage unit 109. As a result of the search, when the channel key exists, the channel key is taken out, and outputted to the descramble unit 107 (step S16). The descramble unit 107 uses the received channel key to descramble the broadcasting contents (step S17), and the broadcasting contents are outputted (step S18), thereby ending the processing.

Even when the channel is not see/hear-contracted in the step S14, as described later, there is a possibility that the channel key decrypted using the time key is stored in the channel key output unit 108. Therefore, the channel key output unit 108 searches the channel key storage unit 109 to check the presence of the channel key of the channel (step S19). When the channel key exists (step S20), the flow advances to step S16 to output the channel key to the descramble unit 107. The broadcasting contents are descrambled to output the broadcasting contents, and the processing ends (steps S17, S18).

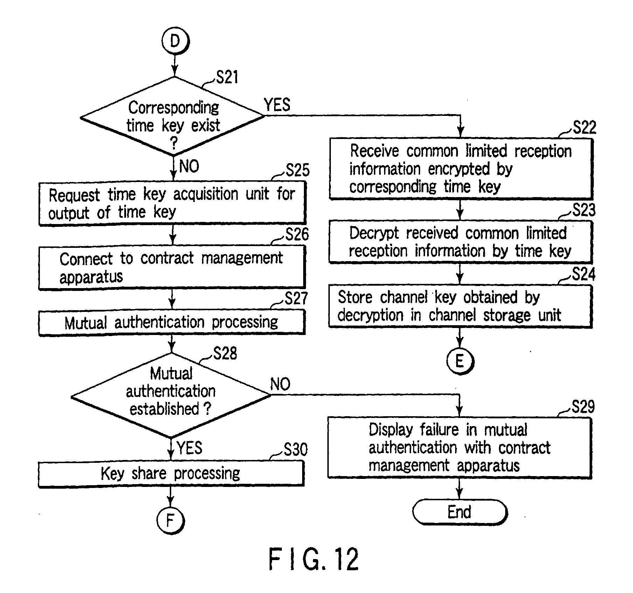

It is assumed that the channel is not see/hear-contracted in the step S14, and the channel key does not exist even with the search of the channel key storage unit 109 in step S20. The processing operation in this case will be described with reference to the flowchart shown in FIG. 12.

Here, first a time key search unit 113 uses the channel identifier of the channel and the present time as the key to search a time key storage unit 112, and judges whether or not the present time and the time key corresponding to the channel to be now seen/heard are stored (step S21). When the time key effective for the time zone including the present time is stored in the time key storage unit 112, the second common limited reception packet including the encrypted common limited reception information (encrypted by the time key) capable of being decrypted by the time key and constituted as shown in FIG. 6 is received as shown in the steps S1 to S7 of FIG. 10 (step S22). The packet is decrypted using the time key in the common limited reception information decryption unit 110 (step S23). The channel key obtained as a result of the decryption is stored in the channel key storage unit 109 (step S24), and the flow returns to the step S19 of FIG. 11.

The channel key is stored in the channel key storage unit 109 in this manner in the step S24. Thereafter, when the channel key storage unit 109 searches the channel key storage unit 109, the channel key of the channel exists in the channel key storage unit 109 (step S20). Then, the flow advances to the step S16 to output the channel key to the descramble unit 107 so that the broadcasting contents of the channel are seen/heard (steps S17, S18).

On the other hand, when the time key effective for the time zone does not exist as a result of the search of the time key storage unit 112 by the time key search unit 113 in step S21 of FIG. 12, there is a possibility that the time key is obtained from the contract management apparatus 11. That is, when the time key effective for the present time zone corresponding to the channel to be seen/heard is stored in the contract management apparatus 11, and the number of remaining points is not less than that of points corresponding to the time key, the time key is outputted from the contract management apparatus 11. Therefore, the flow advances to step S25, and the time key search unit 113 requests a time key acquisition unit 126 to output the time key corresponding to the channel identifier of the channel (step S25).

On receiving this request, the time key acquisition unit 126 is first connected to the contract management apparatus 11 connected to the home network through a network connection unit 127 so that the time key is outputted (step S26). Here, to confirm that a connection end is a proper contract management apparatus 11 and that the proper receiving device is connected to the contract management apparatus 11, a mutual authentication unit 128 performs mutual authentication (step S27).

Since protocol of the mutual authentication in the step S27 is not the scope of the present invention, the algorithm will not be described in detail, but a challenge/response method is performed in which basically an authentication main body issues a question and an authentication objective answers the question.

For example, in the challenge/response using a public-key cryptography, first the receiving device is assumed as the authentication main body, and the contract management apparatus 11 is assumed as the authentication objective. The receiving device transmits a plain sentence prepared at random to the contract management apparatus 11 to issue a challenge in which a secret key known only by the contract management apparatus 11 is used to prepare a digital signature and the apparatus is allowed to return the signature. In response to the sent challenge, the contract management apparatus 11 prepares the digital signature with respect to the plain sentence by the secret key and returns the signature. This is a response. The receiving device side uses a public key (of the contract management apparatus 11) to verify that the returned digital signature corresponds to the plain sentence transmitted before. When this is repeated several times, the verification is successful with a sufficiently large probability (response is successful). In this case, it can be confirmed that the contract management apparatus 11 is the proper apparatus. If not, there is a possibility that the contract management apparatus 11 is not a real proper contract management apparatus. The contract management apparatus 11 is assumed as the authentication main body, and the receiving device is assumed as the authentication objective to perform the similar processing, which is the mutual authentication. It is to be noted that the authentication using the public-key cryptography has been described in this example, but the same can also be realized even with a common-key cryptography. Additionally, in this case, the contract management apparatus 11 and the receiving device need to have a common key beforehand.

It is to be noted that as described above the mutual authentication includes not only the authentication of the device having a certain identifier but also the authentication of the device being a product having a specific model number. In the present embodiment, only the former mutual authentication is considered, but the selection of the authentication is deeply related to a degree of safety to be taken into consideration. Therefore, additionally, various packages exist.

It is to be noted that when the mutual authentication fails (step S28), the receiving device displays that the mutual authentication with the contract management apparatus 11 fails (step S29), and the processing ends. On the other hand, when the authentication is successful (step S28), key share processing is performed for the receiving device and the contract management apparatus 11 to have the common key Kt (step S30).

The key shared herein is used later in encrypting the time key during the output of the time key by the contract management apparatus 11.

For a method of sharing the key, Deffie-Helleman method based on the public-key cryptography is known. This outline will be described.

The receiving device and contract management apparatus 11 determine secret information α, β at random with respect to information M shared (may be published) by the receiving device and contract management apparatus to prepare and mutually transmit M^{α}, M^{β} by function with respect to the information M. Now it is assumed that the receiving device prepares M^{α} based on α prepared at random in the device, and the contract management apparatus 11 receives this. Conversely, the contract management apparatus 11 prepares M^{β} based on β prepared at random in the apparatus, and the receiving device receives this. In this case, the receiving device can calculate M^{βα} based on α possessed by itself and the sent M^{β}. Conversely, the contract management apparatus 11 can calculate M^{αβ} based on β possessed by itself and the sent M^{α}.

Here, when M^{βα} = M^{αβ} is established, this value can be used as the shared key.

For example, this is established by an exponentiation on a finite field Fq. Furthermore, when a size q of the finite field is set to be sufficiently large, it is difficult to obtain α, β from M^{α}, M^{β}. Since this is known, the key can safely be changed even with a listener-in on a communication path.

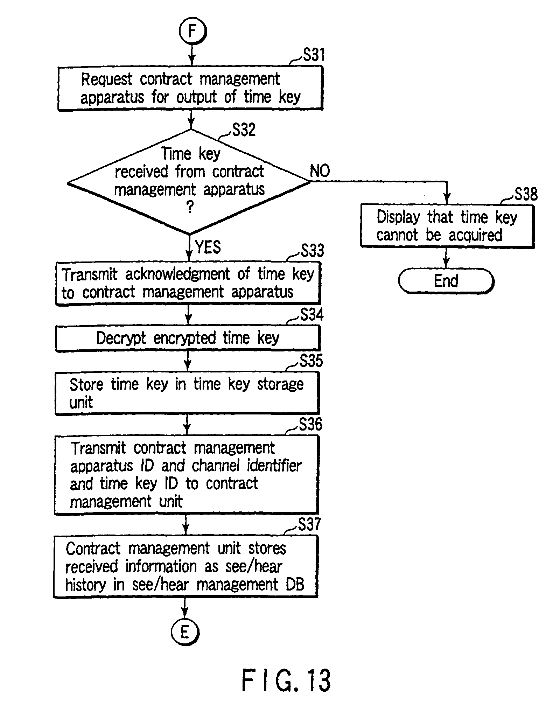

When the key share processing ends as described above, the receiving device requests the contract management apparatus 11 to output the time key (step S31 of FIG. 13). In response to this request, the contract management apparatus 11 outputs the packet (time key information packet) for transmitting time key information (including the time key) encrypted by the common key Kt, and the receiving device receives this (step S32). In this case, the receiving device transmits acknowledgment to the contract management apparatus 11 (step S33). Moreover, when the packet cannot be received, it is displayed that the time key cannot be acquired (step S38).

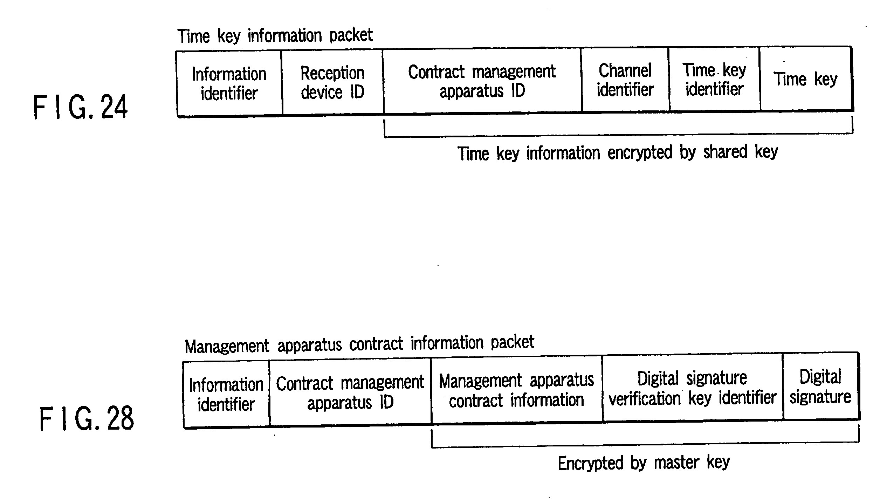

The time key information packet transmitted to the receiving device from the contract management apparatus 11 includes a data structure shown in FIG. 24. The time key information packet includes an information identifier, a receiving device ID, and time key information constituted of a contract management apparatus ID, channel identifier, time key identifier, and time key. The information identifier is information indicating that the packet is a time key information packet, and the receiving device ID indicates an identifier (ID) of the receiving device which is a transmission end of the time key information. It is to be noted that the receiving device ID is transmitted to the contract management apparatus 11 at the time of the mutual authentication. The contract management apparatus ID is an identifier of the contract management apparatus which has issued the time key information. Furthermore, the channel identifier is an identifier of the channel to which the time key is applied, and the time key identifier is an identifier of the time key. The time key information including the time key from the contract management apparatus ID is encrypted.

Turning back to FIG. 13, on receiving the time key information packet transmitted from the contract management apparatus 11, the time key acquisition unit 126 of the receiving device outputs the encrypted time key information in the packet to the time key search unit 113. In the time key search unit 113, the time key information encrypted by the common key Kt is decrypted (step S34). The time key search unit 113 stores the decrypted time key information in the time key storage unit 112 (step S35), and transmits the contract management apparatus ID, channel identifier, and time key ID in the information included in the time key information to a contract management unit 123 (step S36). The contract management unit 123 stores the received contract management apparatus ID, channel identifier, and time key ID in a see/hear history database (see/hear history DB) 125 (step S37).

Every time the time key is outputted to the receiving device from the contract management apparatus 11, the contract management apparatus ID of the contract management apparatus that has outputted the time key, and the channel identifier and time key identifier corresponding to the time key are stored as the see/hear history in the see/hear history DB 125 of the receiving device that has received the time key. By this see/hear history, the time zone in which the channel was seen/heard, the channel, and the contract management apparatus that outputted the key (time key) by which the channel was seen/heard can be seen. These information can be used, if there is any illegal see/hear.

Additionally, after the above-described processing ends, the channel key output unit 108 is on the standby until the time key stored in the time key storage unit 112 is sued to acquire the channel key by the receiving device. That is, when the decrypted time key is stored in the time key storage unit 112 in step S35 of FIG. 13, the flow advances to step S22 from S21 of FIG. 12. The second common limited reception packet including the encrypted common limited reception information (encrypted by the time key) capable of being decrypted by the time key and constituted as shown in FIG. 6 is received as shown in the steps S1 to S7 of FIG. 10 (step S22). The packet is decrypted using the time key in the common limited reception information decryption unit 110 (step S23). The channel key obtained as a result of the decryption is stored in the channel key storage unit 109 (step S24).

After the channel key output unit 108 is on standby in this manner for a time sufficient for storing the channel key in the channel key storage unit 109 in the step S24, the channel key storage unit 109 is searched (step S19 of FIG. 11). In this case, since the channel key output unit 108 finds the channel key in the channel key storage unit 109 (step S20), the unit advances to step S16 to output the channel key to the descramble unit 107, so that the broadcasting contents of the channel can be seen/heard (steps S17, S18).

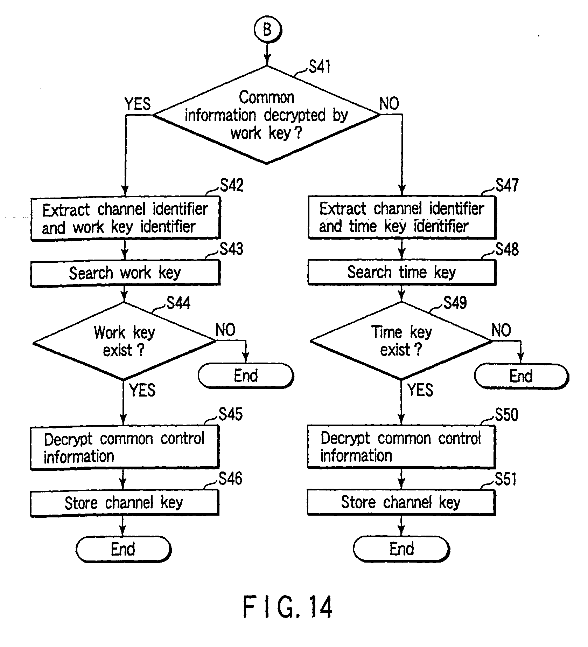

Next, the processing concerning the common limited reception packet will be described with reference to the flowchart shown in FIG. 14. As described above, the common limited reception packet is sent to the common limited reception information decryption unit 110 from the filter unit 106 (step S8 of FIG. 10).

The common limited reception information decryption unit 110 refers to the information identifier to judge whether the packet is the packet including the common limited reception information encrypted by the work key as shown in FIG. 5 (first common limited reception packet) or the packet including the common limited reception information encrypted by the time key as shown in FIG. 6 (second common limited reception packet) (step S41).

With the first common limited reception packet, the channel and work key identifiers are taken out of a non-encrypted portion in the packet (step S42), and the work key corresponding to the channel and work key identifiers is searched from a work key storage unit 111 (step S43).

When the work key is not stored in the work key storage unit 111 (step S44), the processing concerning the packet is ended in this stage. When the work key is stored in the work key storage unit 111, the common limited reception information decryption unit 110 takes the work key from the work key storage unit 111, and uses the key to decrypt the encrypted common limited reception information (step S45). The channel key Kch is acquired from the decrypted common limited reception information, and stored in the channel key storage unit 109 (step S46).

On the other hand, in the step S41, when the common limited reception packet transferred from the filter unit 106 is the second common limited reception packet, the flow advances to step S47 to extract the channel and time key identifiers included in the non-encrypted portion in the packet (step S47). The time key corresponding to the channel and time key identifiers is searched from the time key storage unit 112 (step S48).

When the time key is not stored in the time key storage unit 112 (step S49), the processing concerning the packet is ended in this stage.

When the time key is stored in the time key storage unit 112, the common limited reception information decryption unit 110 extracts the time key from the time key storage unit 112, and uses the key to decrypt the common limited reception information (step S50). The channel key Kch is acquired from the decrypted common limited reception information, and stored in the channel key storage unit 109 (step S51).

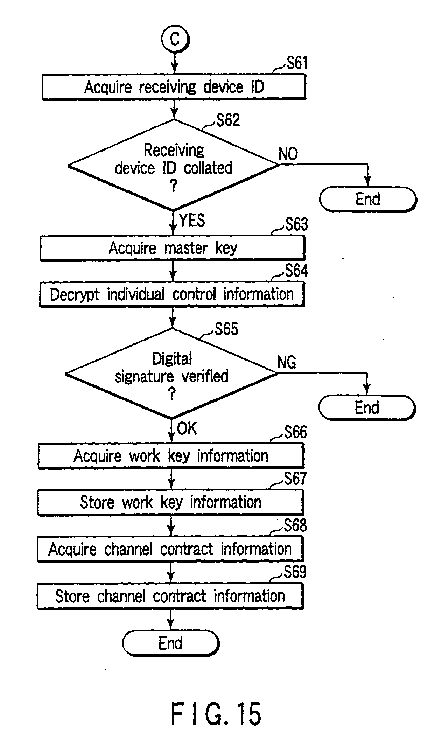

Next, the processing concerning the individual limited reception packet will be described with reference to the flowchart shown in FIG. 15. The received individual limited reception packet is the first individual limited reception packet constituted as shown in FIG. 7. The first individual limited reception packet is sent to the individual limited reception information authentication unit 114 from the filter unit 106 as described above (step S10 of FIG. 10).

The individual limited reception information authentication unit 114 first acquires the receiving device ID from a receiving device ID storage unit 115 (step S61). Moreover, the receiving device ID extracted from the receiving device ID storage unit 115 is collated with the receiving device ID included in the non-encrypted portion in the receiving device first individual limited reception packet (step S62). As a result of collation, when the IDs are different from each other, the processing concerning the packet is ended. When they agree with each other as a result of collation, the individual limited reception information encrypted by the common key in the packet is transferred to an individual control information decryption unit 116.

The individual control information decryption unit 116 first extracts the master key Kmi from a master key storage unit 117 (step S63), and uses the key to decrypt the encrypted portion of the individual limited reception information (step S64).

First the digital signature is extracted from the decrypted individual limited reception information, and authenticated.

Here, the digital signature will briefly be described. Here, two digital signatures are roughly considered. For one of them, for example, a message authentication code (MAC) is prepared as the digital signature in a common key encryption system. That is, the broadcasting station 2 and receiving device have a common encryption algorithm and a common secret key, successively encrypt the receiving device contract information, expiration date, and work key information with the secret key by the block unit, and uses the last block as the digital signature. Here, the successive encryption is such a system of encryption that the previous block influences the encryption of the present block. For example, the present block is encrypted by the secret key, and an exclusive OR of this result and the encryption result of the previous block is obtained as the encryption result of the present block. With the use of this method realized in this manner, even when the interim block is tampered, a different digital signature is prepared (in most cases). Therefore, the tampering is detected. The signature can be verified by a common-key cryptography at a high rate. Additionally, a circuit scale is sufficiently small. However, the receiving device includes the same information as that of the broadcasting station, hacking is easily caused.

For the other digital signature, in a method using the public-key cryptography, the signature by the secret key is verified by a public key. Here, it is remarkably difficult to derive the secret key from the public key. Therefore, even when the receiving device is hacked to extract the public key, the tampering is considerably difficult. This system is a remarkably high in safety, but there are also disadvantages such as a low rate and a large circuit scale.

As seen from the above, when the authentication of the digital signature fails (step S65), the packet is forged or a noise is produced. Therefore, the processing of the packet is ended.

When the authentication is successful (step S65), the work key information is extracted from the decrypted individual limited reception information (step S66), and stored in the work key storage unit 111 (step S67). Furthermore, receiving device contract information (here, the channel contract information) is extracted from the decrypted individual limited reception information (step S68), and stored in the contract information storage unit 120 (step S69), thereby ending the processing with respect to the packet.

Here, the contract management unit 123 will be described. For the contract management unit 123, as described above (step S37 of FIG. 13), every time the receiving device receives the time key outputted from the contract management apparatus 11, the see/hear history (ID and channel identifier of the time key, contract management apparatus ID of the contract management apparatus which outputted the time key) is stored in the see/hear history DB 125.

Furthermore, the contract management unit 123 periodically transmits the see/hear history information (information in which the contract management apparatus ID, channel identifier, and time key identifier form one record) stored in the see/hear history DB 125 to the broadcasting contract server 21 via the network connection unit 127.

For the see/hear other than the see/hear by the receiving device contract information, the receiving device of the present embodiment uses the time key transmitted from the contract management apparatus 11 in the see/hear. The see/hear by a plurality of receiving devices connected to the home network is managed by the contract management apparatus 11 described later in detail. However, it is necessary to detect a situation in which the contract management apparatus 11 is altered and the contract cannot correctly be managed. Therefore, in the present embodiment, the contract management unit 123 is disposed in the receiving device. That is, the contract management unit 123 stores see/hear history information, and periodically transmits the information to the contract management server 21 through a communication circuit (network such as internet) connecting the home network to the contract management server 21. It is to be noted that during the transmission of the see/hear history to the contract management server from the receiving device, the history is necessarily transmitted via the contract management apparatus 11. In this case, the contract management apparatus 11 simply performs a function of a communication apparatus including functions of a bridge, router, and gateway for the connection of an external network to the home network. That is, for the processing other than conversion to the packet including a data structure suitable for specifications of external network, the content of the transmitted information is not related or processed.

On receiving the see/hear history transmitted from the contract management apparatus 11 of each subscriber's house, the contract management server 21 collates the history with the management apparatus contract information transmitted to the contract management apparatus 11 to check whether or not there is any contradiction. When it is apparent that the information is seen/heard more than management apparatus contract information transmitted to the contract management apparatus 11, there is a possibility that the contract management apparatus 11 is illegally used. Therefore, illegal see/hear is inhibited by means for discontinuing the transmission of the time key to the contract management apparatus 11.

It is to be noted that in the present embodiment, the digital signature prepared by the receiving device ID and the secret key of the receiving device is attached to the see/hear history transmitted to the contract management server 21 from each receiving device. This prevents the tampering during the communication, or impersonation, and a correct see/hear history can be transmitted to the contract management server 21 from the receiving device.

The description of the basic part of the receiving device in the present embodiment has been ended.

Next, several variations concerning the above-described limited reception system will be described.

### 1.2.1 First Variation

In the above-described embodiment, one of two types of individual limited reception packets is broadcasted/distributed, but there can be a variation in which the individual limited reception packet is not broadcasted/distributed.

In the above-described embodiment, each receiving device includes not only a function of acquiring the channel key by the work key to decrypt and see/hear the encrypted broadcasting contents in the same manner as in the conventional function but also a function of using the time key distributed from the contract management apparatus 11 to acquire the channel key, and decrypting and seeing/hearing the encrypted broadcasting contents. In this manner, attempts are made to conform to a conventional broadcasting service mode.

However, a limited reception method is also possible in which the broadcasting contents are seen/heard only by the latter function without depending on the conventional limited reception method. Here, a case where the broadcasting contents are seen/heard only by the time key distributed to each receiving device from the contract management apparatus 11 via the home network will be described.

In this case, the first individual limited reception packet shown in FIG. 7 (packet including the work key and receiving device contract information encrypted by the master key inherent in each receiving device) and the first common limited reception packet shown in FIG. 5 (packet including the common limited reception information encrypted by the work key) are not broadcasted/distributed. Only the second common limited reception packet shown in FIG. 6 (packet including the common limited reception information encrypted by the time key) and the encrypted broadcasting contents shown in FIG. 4 are broadcasted/distributed.

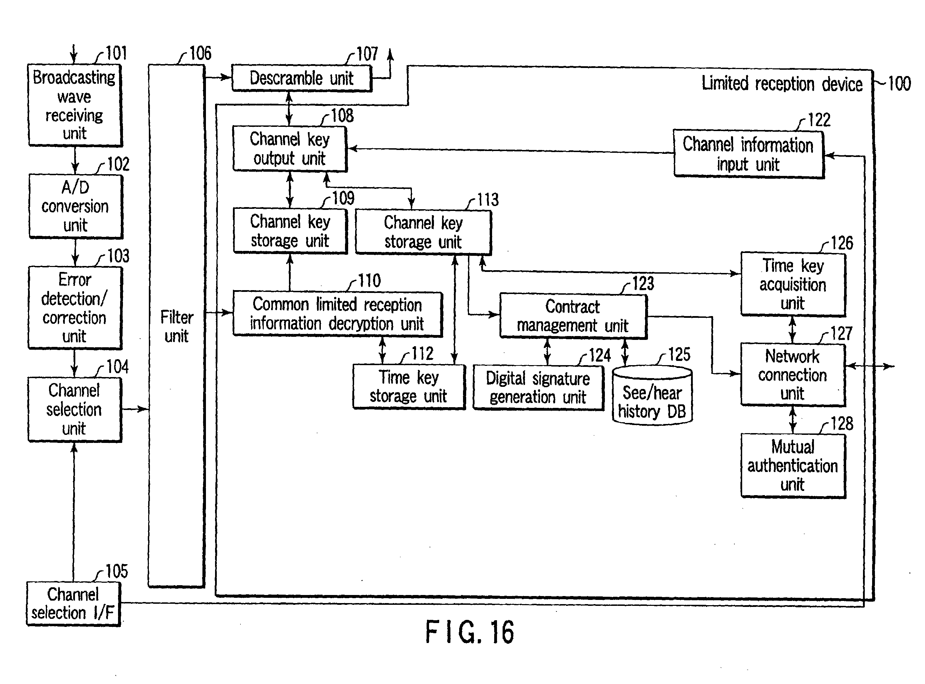

For the receiving device, the constituting or storage unit concerning the first individual limited reception packet and the first common limited reception packet which are not broadcasted/distributed (e.g., the work key storage unit 111, individual limited reception information authentication unit 114, and the like) is removed from the constitution of the receiving device shown in FIG. 9 to obtain a constitution, for example, shown in FIG. 16.

In this case, the limited reception information to be broadcasted/distributed can largely be reduced. Additionally, the constitution of the receiving device can be simplified.

For the processing operation of the receiving device shown in FIG. 16, the processing operation relating to the removed constituting unit is removed from that of the receiving device shown in FIG. 9 (FIGS. 10 to 15).

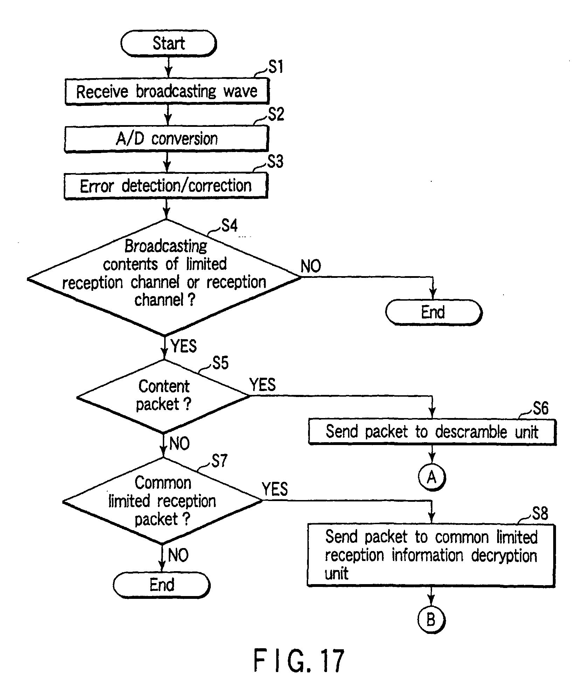

Concretely, the steps S9 an S10 are removed from the flowchart of FIG. 10 (see FIG. 17). Moreover, only the second common limited reception packet shown in FIG. 6 is received in the step S7.

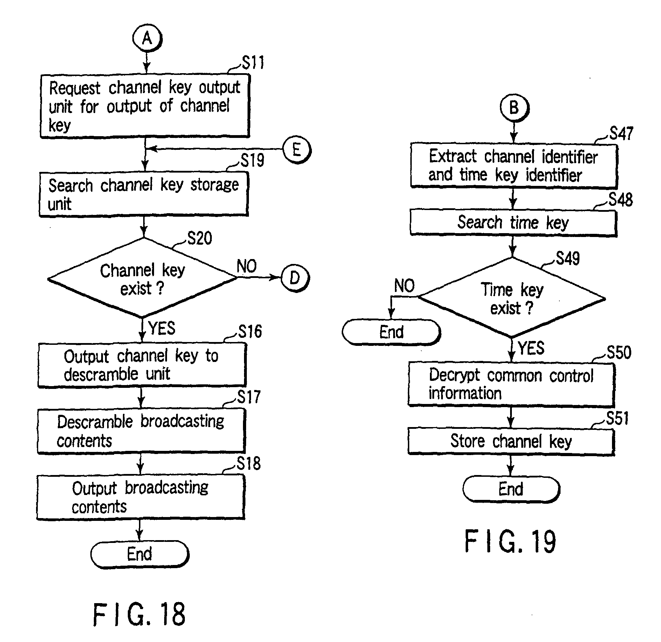

Moreover, the steps S12 to S15 are removed from the processing operation during the reception of the content packet shown in FIG. 11 (see FIG. 18). When the descramble unit 107 transfers the channel and channel key identifiers to the channel key output unit 108 to request for the output of the channel key (step S11), the processing advances to the step S19. The channel key output unit 108 searches the channel key storage unit 109 to check whether or not the channel key of the corresponding channel exists. When the channel key exists (step S20), the processing advances to the step S16. The channel key is outputted to the descramble unit 107 to descramble the broadcasting contents, and the broadcasting contents are outputted to end the processing (steps S17, S18).

In the step S20, when the channel key does not exist in the channel key storage unit 109, the processing operation is performed along the flowchart shown in FIGS. 12 and 13. That is, when the present time and the time key corresponding to the channel to be seen/heard are stored in the time key storage unit 112, the second common limited reception packet that can be decrypted by the time key is received, and decrypted using the time key in the common limited reception information decryption unit 110. The channel key obtained as a result of the decryption is stored in the channel key storage unit 109, and the processing returns to the step S19 of FIG. 18.

On the other hand, when the time key effective for the time zone does not exist in the time key storage unit 112 in the step S21 of FIG. 12, the operation shown in the steps S25 to S30 of FIG. 12 and the steps S31 to S37 of FIG. 13 is performed so that the contract management apparatus 11 outputs the time key (e.g., when the time key effective for the present time zone corresponding to the channel to be now seen/heard is stored in the contract management apparatus 11, and the number of remaining points is not less than the number of points corresponding to the time key, the time key is outputted from the contract management apparatus 11). As a result, when the time key is outputted from the contract management apparatus 11, the key is stored in the time key storage unit 112. Also in this case, the contract management unit 123 stores the see/hear history in the see/hear history DB 125 in the same manner as described above.

For the processing concerning the common limited reception packet, the processing operation relating to the removed constituting portion (steps S41 to S46) is removed from that of the receiving device shown in FIG. 14 (see FIG. 19). That is, since only the second common limited reception packet is received, the channel and time key identifiers are extracted from the second common limited reception packet. When the time key corresponding to the channel and time key identifiers is stored in the time key storage unit 112, the key is used to decrypt the encrypted common limited reception information. The channel key Kch is acquired from the decrypted common limited reception information, and stored in the channel key storage unit 109.

### 1.2.2 Second Variation

As a second variation, the use of a week key to be changed every week, a day key to be changed every day, and a program key to be changed every program instead of the time key used in the first embodiment will be described.

Since it is assumed that the time key is changed every hour as predetermined, the channel key encrypted by the time key is transmitted, the pay per hour (PPH) see/hear can safely be realized. In the same manner, the week key to be changed every week, the day key to be changed every day, and the program key to be changed every program are set so that week see/hear, day see/hear, and program see/hear are possible. Especially, the last mentioned program see/hear means that a service mode heretofore referred to as PPV can also be realized even in the present invention.

In this case, for the constitution of the receiving device, in FIG. 9 or 16, in addition to the time key storage unit 112, a week key storage unit, day key storage unit, and program key storage unit are disposed, and the key transmitted from the contract management apparatus 11 is stored in the storage unit by the type. That is, the receiving device uses at least one of the time key, week key, day key, and program key to decrypt the contents.

The constitution of the second common limited reception packet to be broadcasted/distributed is similar to that of FIG. 6. Since the common limited reception information encrypted by any of the week key, day key, and program key instead of the time key is distributed, the common limited reception information encrypted by any key, and the second common limited reception packet including the identifier of the key used in the encryption are broadcasted/distributed. That is, for the second common limited reception packet there are four types: a packet including the common limited reception information encrypted by the time key; a packet including the common limited reception information encrypted by the week key; a packet including the common limited reception information encrypted by the day key; and a packet including the common limited reception information encrypted by the program key.

The receiving device may use the key designated by the received second common limited reception packet to decrypt the encrypted common limited reception information included in the packet, and extract the channel key from the common limited reception information obtained as a result of the decryption.

For example, when the receiving device connectable to the home network includes the receiving device viewable while moving, such as a mobile receiving device, the time key is stored in the mobile receiving device via the home network, and the mobile receiving device is once detached from the home network and used. With the time key, the contents can be seen/heard only for one hour at maximum. With this mobile receiving device, it is more convenient to decrypt the contents using the week key, day key, or program key longer than the time key in the expiration date. Moreover, as apparent, considerations need to be taken so as to increase the number of points to be subtracted while outputting the key having a long effective period on the side of the contract management apparatus.

### 1.2.3 Third Variation

As a third variation, addition of an interface to the receiving device will be described. With the interface, in acquiring the time key, an inquiry is made to the audience as to whether or not the time key is acquired.

In the first embodiment, to see/hear the channel, the time key is acquired without any condition. In this realization mode, (to extremely state), when a channel change button is continued to be pushed in order to move to another channel, the channels are switched one after another. There is a problem that the time key is acquired every time, and the number of points is subtracted without any intention to see/hear the channel.

To solve the problem, a warning and confirmation are displayed in a screen concerning the channel requiring the time key. Accordingly, the audience actually acquires the time key to start the seeing/hearing at the time of instruction to acquire the time key.

To constitute the receiving device, in FIG. 9 or 16, the time key search unit 113 or the time key acquisition unit 126 is connected to an interface unit for making the inquiry as to whether the acquisition processing of the time key is possible. Before or after the step S25 of FIG. 12, the interface unit performs an operation to inquire whether or not the acquisition processing of the time key is possible.

The interface unit outputs information to determine whether or not to acquire the time key to the time key search unit 113 or the time key acquisition unit 126 in accordance with the warning display and the confirmation display on the display screen of the receiving device and the input of the audience's instruction. When the acquisition instruction for the time key is obtained from the audience, the processing operation of or after the step S25 or S26 is performed.

### 1.2.4 Fourth Variation

As a fourth variation, the encryption of the time key will be described. In the first embodiment, when the time key is transmitted to the receiving device from the contract management apparatus 11, the time key is encrypted by the key Kt shared between the receiving device and the contract management apparatus 11, but the present invention is not limited to this case. The time key may also be encrypted, for example, by the master key Kmi of the receiving device and transmitted. When the contract management apparatus 11 is sufficiently safe and the receiving device to be managed by the contract management apparatus 11 is predetermined, a method of storing the master key of the receiving device beforehand in the contract management apparatus 11 to use the key is considered. In this method, even when the key share processing is omitted, the time key can safely be transmitted to the receiving device. However, in this case, it is assumed that the contract management apparatus 11 is sufficiently safe. In a situation where this is not realized, it is preferable to share the key as in the first embodiment.

### 1.2.5 Others

In the first embodiment and various variations, the major processing is performed only inside the limited reception device 100, but it may also be considered that only the descramble unit 107 be mounted outside the limited reception device 100.

For the descramble unit 107, (since the broadcasting contents are decrypted,) the decryption has to be carried out in real time. Therefore, high-rate processing is required. On the other hand, for another part, a portion to be constantly operated is little. Additionally, there is some margin in the processing time. Therefore, the unit is advantageously mounted. For example, to dispose the receiving device common with another broadcasting, a mount method is considered in which a scramble system of the broadcasting contents is used in common with all the broadcastings and only a limited reception portion (to hold secret information in each broadcasting) is mounted on detachable/attachable media such as an IC card.

It is added that the above-described mounting is also possible in the above-described embodiment and a second embodiment described later.

### 1.3 Contract Management Apparatus

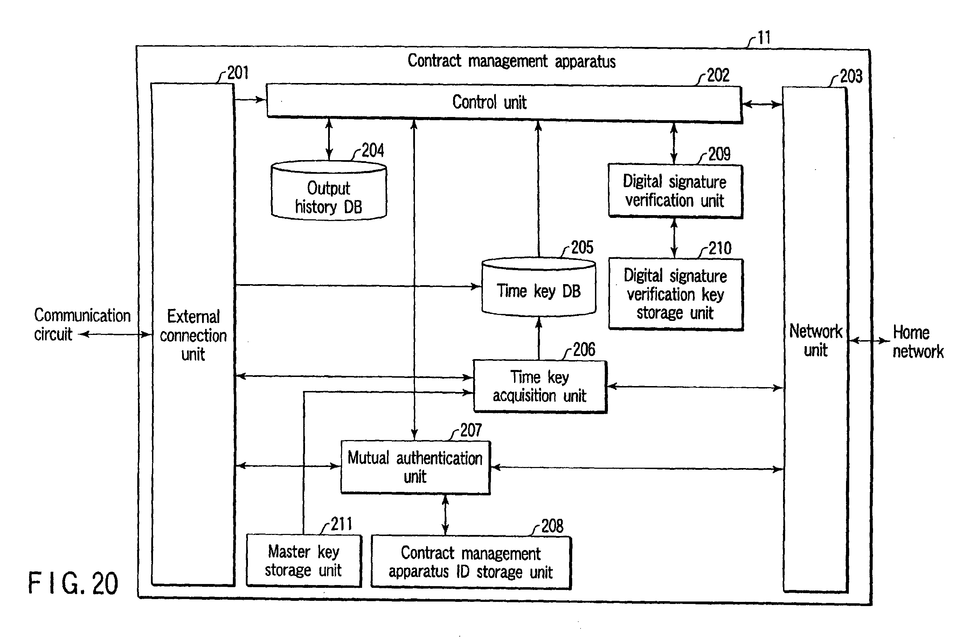

Next, the constitution and processing operation of the contract management apparatus 11 will be described with reference to the whole constitution diagram of the contract management apparatus 11 shown in FIG. 20. There are three types of the processing operation of the contract management apparatus 11 in the present embodiment: key output management processing to be started when receiving a connection request accompanying the request for the output of the time key from the receiving device; time key input processing for inputting the time key outputted from the contract management server 21, when the contract management apparatus 11 requests the contract management server 21 to output the time key; and management apparatus contract information input processing for inputting management apparatus contract information outputted from the contract management server 21, when the contract management apparatus 11 requests the contract management server 21 to output the management apparatus contract information.

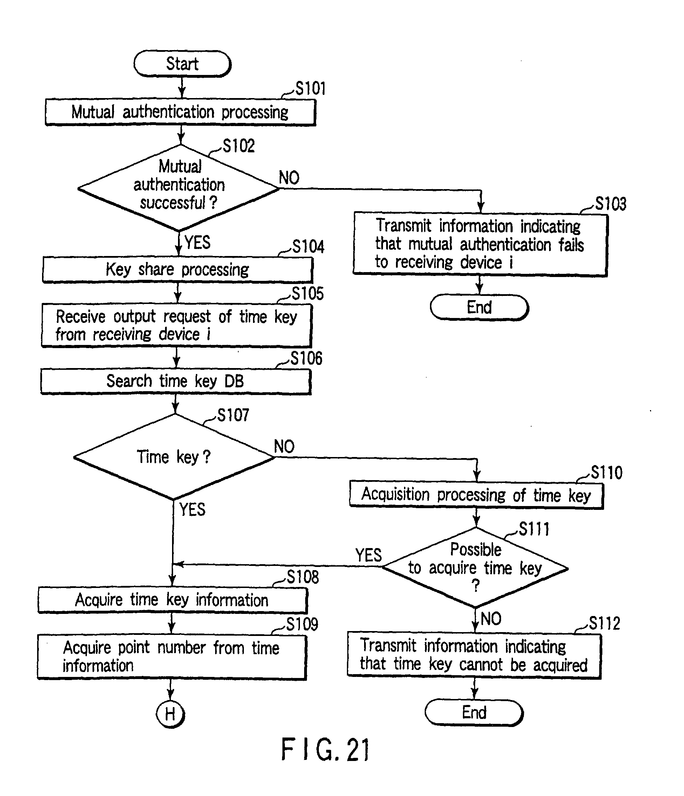

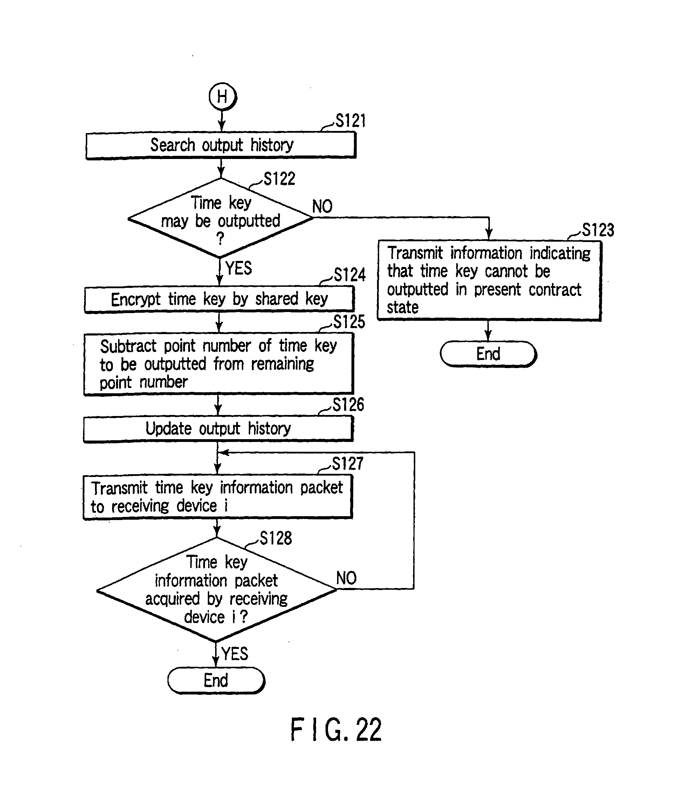

First, the time key output management processing will be described along the flowchart shown in FIGS. 21 and 22.

A connection request accompanying the output request of the time key is transmitted from the receiving device connected to the home network in the step S26 of FIG. 12. On receiving the connection request from the receiving device connected to the home network via a network unit 203, the contract management apparatus 11 transmits the request to a control unit 202. When the control unit 202 receives the connection request, a mutual authentication unit 207 performs mutual authentication processing with the receiving device (step S101). The mutual authentication processing of the step S101 corresponds to the step S27 of FIG. 12 indicating the processing operation of the receiving device, and is similar to the processing described in the step S27.

When the mutual authentication fails as a result of the mutual authentication processing (step S102), the information indicating that is transmitted to the receiving device, and the processing is ended (step S103). When the mutual authentication is successful as a result of the mutual authentication processing (step S102), the control unit 202 performs a key share processing (step S104). The key share processing of the step S104 corresponds to the step S30 of FIG. 12 indicating the processing operation of the receiving device, and is similar to the processing described in the step S30.

When the shared key Kt shared between the receiving device and the contract management apparatus 11 is prepared by the key share processing, the receiving device (a receiving device i is assumed here) transmits the output request of the time key in the step S31 of FIG. 13. At this time, the channel identifier is also transmitted to the contract management apparatus 11. In response to this request (step S105), the control unit 202 uses the present time and the channel identifier transmitted from the receiving device as the key to search a time key database (time key DB) 205 (step S106).

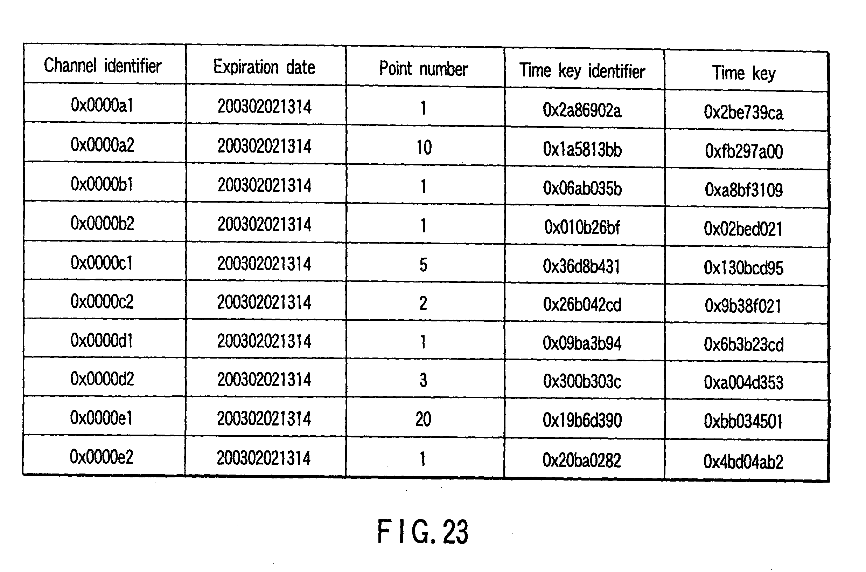

For example, as shown in FIG. 23, a plurality of records each constituted of the channel identifier, expiration date, point number, time key identifier, and time key are stored in the time key DB 205.

Here, the channel identifier is the identifier of the channel to which the time key in the record is applied, and the expiration date indicates a period in which the time key is valid. In FIG. 23, the expiration date is all "200302021314", and indicates that expiration time is 13:00 to 14:00 on February 2, 2003.

The point number indicates the number of points required for outputting the time key (to the receiving device). Basically, a high point is required for a content hg a high added value. Examples of the content high in the added value is the latest movie.

The time key identifier indicates the identifier of the corresponding time key. In order to simplify description, it is to be noted that a 32 bit key is assumed as the time key.

As long as the contract management apparatus 11 can normally acquire the time key from the contract management server 21, only one time key to be searched is stored in the time key DB 205. When the time key satisfying the channel identifier transmitted from the receiving device i and the present time is stored in the time key DB 205 as a result of the search in step S106 (step S107), each record including the time key is extracted from the time key DB 205 for use as the time key information (step S108).

When the time key satisfying the channel identifier transmitted from the receiving device i and the present time is not stored in the time key DB 205 (step S107), the processing is performed to acquire the time key from the contract management server 21 as described later (step S110). When the time key is acquired as a result (step S111), the time key is stored in the time key DB 205 (step S111). The processing returns to the step S108 in which the control unit 202 extracts the record including the time key from the time key DB 205 to obtain the time key information.

It is to be noted that when the time key cannot be acquired from the contract management server 21 in the step S111, the information indicating that is transmitted to the receiving device i to end the processing (step S112).

On acquiring the time key information, the control unit 202 acquires the point number from the information (step S109).

Next, an output history database (output history DB) 204 is searched to acquire the remaining point number, and the number is compared with the point number acquired in the step S109 (step S121 of FIG. 22). When the remaining point number is not less than the point number acquired in the step S109, it is judged that it is possible to output the time key (step S122). If not so, it is judged that the output is impossible (step S122), information indicating that it is impossible to output the time key in the existing contract state is transmitted to the receiving device i, and the processing is ended (step S123).

It is assumed that it is judged to be possible to output the time key in the step S122. The control unit 202 encrypts the time key information including the channel identifier, time key identifier, and time key in the time key information acquired from the time key DB 205 and further including the ID of the contract management apparatus to be transmitted to the receiving device i by the shared key obtained in the step S104 (step S124) to prepare the time key information packet constituted as shown in FIG. 24.

The control unit 202 updates the remaining point number in the output history DB 204 with the result of subtraction of the point number corresponding to the time key transmitted to the receiving device i from the remaining point number presently stored in the output history DB 204 (steps S125, S126). Thereafter, the prepared time key information packet is transmitted to the receiving device i from the network unit 203 via the home network 1 (step S127).

When the receiving device i receives the time key information packet transmitted from the contract management apparatus 11 as shown in FIG. 13 (step S32 of FIG. 13), the device transmits the acknowledgment to the contract management apparatus 11 (step S33 of FIG. 13).

The contract management apparatus 11 receives the acknowledgment from the receiving device i, and ends the processing, when the success of the transmission can be confirmed (step S128). If not, the transmission of the time key information packet is repeated until the acknowledgment is received (steps S128, S127).

The key output management processing operation of the contract management apparatus 11 has been described above.

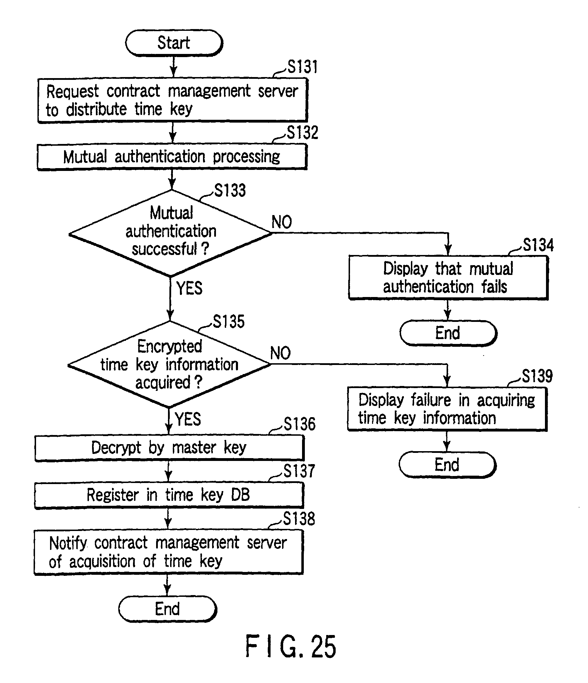

Next, a time key input processing operation of the contract management apparatus 11 will be described with reference to the flowchart shown in FIG. 25. In the operation, the time key distributed to the contract management apparatus 11 from the contract management server 21 is received by each contract management apparatus 11.

The control unit 202 of the contract management apparatus 11 accesses the contract management server 21 periodically or irregularly in response to the request from the receiving device to request for the distribution of the time key. Here, a connection request packet to be transmitted to the contract management server 21 at the time of the request for the time key includes information such as the channel identifier and the expiration date by which the time key is to be acquired. It is to be noted that the time key is acquired in this processing regardless of whether or not the contents are seen/heard using the time key. Therefore, the distribution of the time key for all the channels is constantly requested.

The control unit 202 of the contract management apparatus 11 starts the processing operation for connecting the apparatus to the contract management server 21 from an external connection unit 201 via a communication circuit on a dial-up network or the network such as internet every predetermined time, or when the time key to be transferred to the receiving device does not exist in the time key DB 205 in the step S107 of FIG. 21 (step S131). Thereafter, the mutual authentication processing with the contract management server 21 is performed in the mutual authentication unit 207 of the contract management apparatus 11 (step S132). In the mutual authentication processing, for example, the challenge/response authentication is performed in the same manner as in the above-described mutual authentication between the receiving device and the contract management apparatus 11.

When the validity on the other party side cannot be confirmed, and the authentication fails as a result of the mutual authentication processing (step S133), the information indicating this is transmitted to the contract management apparatus 11 to end the processing (step S134).

When the validity on the other party side is confirmed, and the authentication is successful as the result of the mutual authentication processing (step S133), the time key information packet is transmitted from the contract management server 21. The time key information packet transmitted from the contract management server 21 is received from the network unit 203, and transferred to a time key acquisition unit 206.

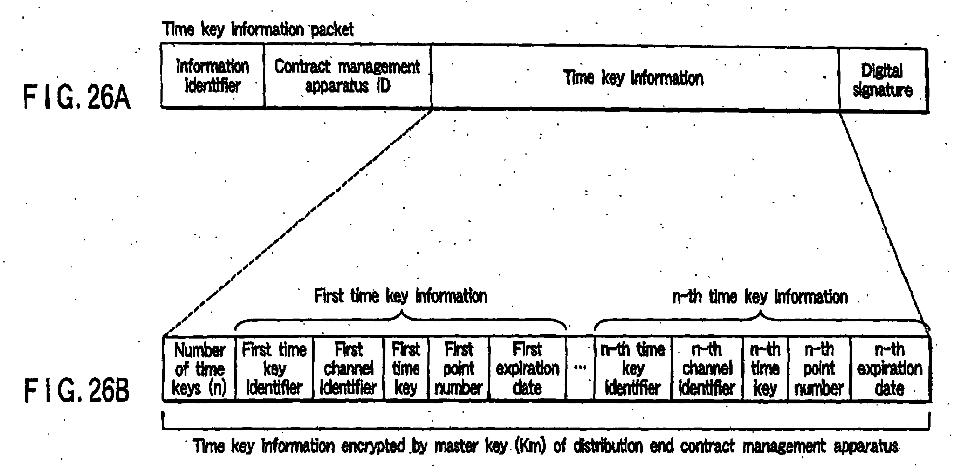

As shown in FIG. 26A, the time key information packet transmitted from the contract management server 21 is constituted of an information identifier, contract management apparatus ID, time key information, and digital signature, and the portion of the time key information is encrypted by the master key Km of the contract management apparatus which is the distribution destination of the packet.

The information identifier is information indicating that the packet is the time key information packet distributed from the contract management server 21. The contract management apparatus ID is an ID of the contract management apparatus which is the distribution destination of the packet.

As shown in FIG. 26B, the time key information includes information indicating the number of time keys (n keys herein), and n pieces of time key information. Each time key information corresponds to one record stored in the time key DB 205 of the contract management apparatus 11.

Each of n pieces of time key information includes a time key identifier, channel identifier, time key, point number, and expiration date. The time key identifier, channel identifier, time key, point number, and expiration date are the same as the information constituting each record stored in the time key DB 205 as shown in FIG. 23.

The digital signature is added to inhibit the key information packet from being used in another receiving device.

On receiving the time key information packet shown in FIGS. 26A and 26B (step S135), the time key acquisition unit 206 decrypt the encrypted portion in the packet by the master key Km stored in a master key storage unit 211. As a result, obtained n pieces of time key information are registered in the time key DB 205 (step S137), and an acquisition notice of the time key information is transmitted to the contract management server 21 (step S138).

On the other hand, it is assumed that the time key acquisition unit 206 cannot receive the time key information packet even after the elapse of a predetermined time in step S135. At this time, as described later, there is a possibility that the distribution of the time key information packet to the contract management apparatus 11 is limited for some reason in the contract management server 21. Therefore, the failure in the acquisition of the time key information is displayed, and the whole processing is ended (step S139).

The time key input processing operation of the contract management apparatus 11 has been described.

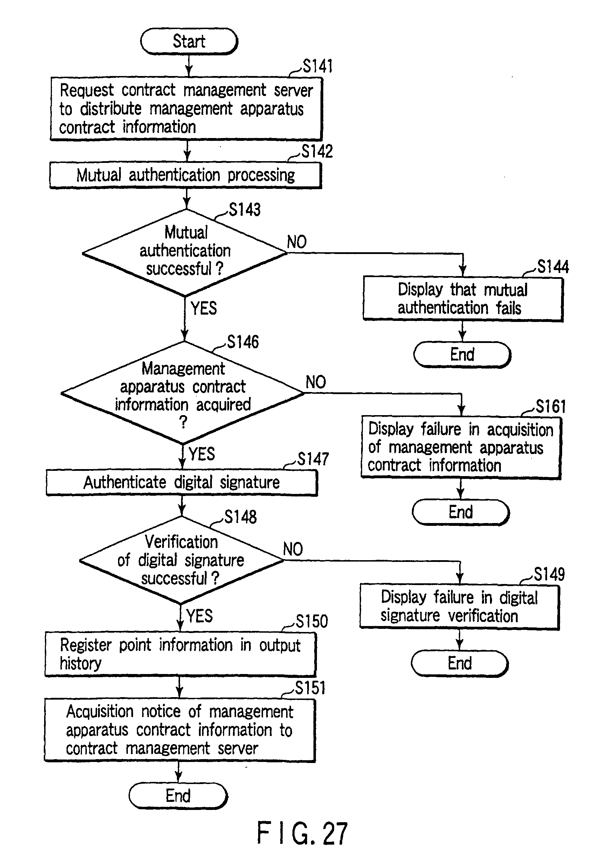

Next, the management apparatus contract information input processing operation of the contract management apparatus 11 will be described with reference to the flowchart of FIG. 27. In the operation, the management apparatus contract information to be distributed to each contract management apparatus 11 from the contract management server 21 is received by each contract management apparatus 11.

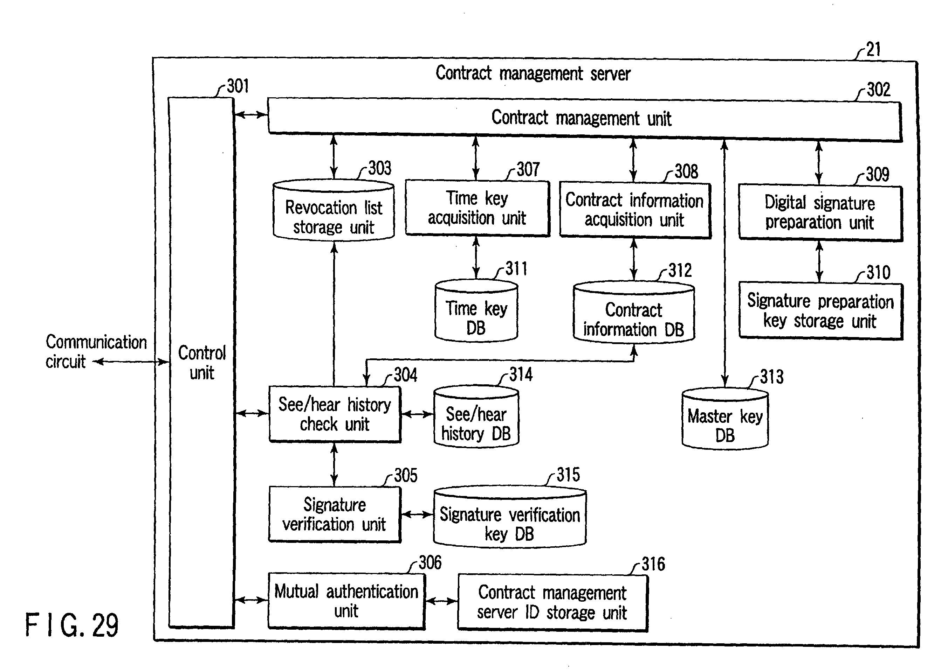

As shown in FIG. 28, a management apparatus contract information packet distributed from the contract management server 21 is constituted of an information identifier, contract management apparatus ID, management apparatus contract information, digital signature verification key identifier, and digital signature. The information identifier indicates that the packet distributes the management apparatus contract information, and the digital signature verification key identifier indicates the identifier of the key for verifying the digital signature applied to the packet.

The digital signature is by the secret key known only to the contract management server 21 in order to indicate that the packet is securely issued by the contract management server 21 and is not forged or tampered midway. It is to be noted that the range of the signature includes the digital signature verification key identifier from the information identifier, and the digital signature from the management apparatus contract information is encrypted by the master key Km of the contract management apparatus.

In FIG. 27, the control unit 202 of the contract management apparatus 11 starts the processing operation for the connection to the contract management server 21 from the external connection unit 201 via the communication circuit on the dial-up network, for example, every predetermined time (e.g., every month, when the unit time of a contract period is one month) (step S141).

In this case, the mutual authentication processing with the contract management server 21 is performed in the mutual authentication unit 207 of the contract management apparatus 11 (step S142). This mutual authentication processing is performed, for example, by the challenge/response authentication in the same manner as in the above-described mutual authentication processing between the receiving device and the contract management apparatus 11.

When the validity on the other party side cannot be confirmed, and the authentication fails as the result of the mutual authentication processing (step S143), the information indicating this is transmitted to the contract management apparatus 11 to end the processing (step S144).

When the validity on the other party side is confirmed, and the authentication is successful as the result of the mutual authentication processing (step S143), the contract management server 21 transmits a management apparatus contract information packet shown in FIG. 28 to the contract management apparatus 11. In the packet, the management apparatus contract information, digital signature verification key identifier, and digital signature are encrypted by the master key Km of the contract management apparatus 11. It is to be noted that the management apparatus contract information, digital signature verification key identifier, and digital signature may be encrypted by the shared key between the contract management apparatus 11 and the contract management server 21 instead of the master key. In this case, after the mutual authentication processing, the key share processing is performed (e.g., in the same manner as in the key share processing between the receiving device and the contract management apparatus 11 in the step S30 of FIG. 12).

The management apparatus contract information packet transmitted from the contract management server 21 is received by the network unit 203 and transferred to the control unit 202.

On receiving the management apparatus contract information packet shown in FIG. 28 (step S146), the control unit 202 extracts the master key Km from the master key storage unit 211, and uses the key (or the shared key acquired in the step S145) to decrypt the encrypted portion of the packet, and a digital signature verification unit 209 verifies the digital signature in the packet (step S147). With the failure in the verification (step S148), a certain reception defect, forgery, or tamper is considered to arise. Therefore, the information in the packet is discarded to end the processing (step S149).

When the verification of the digital signature is successful (step S148), the management apparatus contract information in the packet, that is, the point information is acquired. Moreover, the remaining points stored in the output history DB 204 are overwritten with the point information to update the remaining point number (step S150). Thereafter, the contract management apparatus 11 transmits the acquisition notice of the management apparatus contract information to the contract management server 21 (step S151).

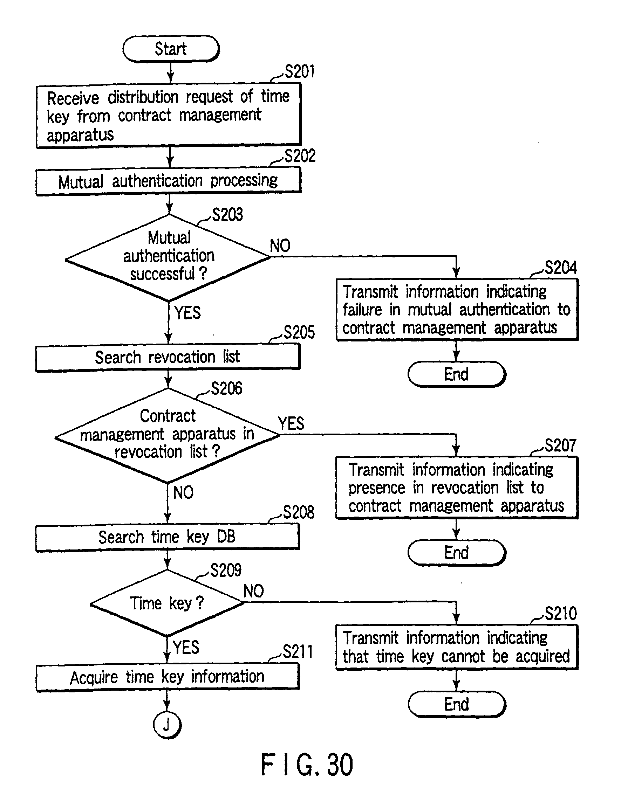

It is to be noted that it is assumed that the control unit 202 cannot receive the management apparatus contract information packet even after the elapse of the predetermined time in the step S146. At this time, as described later, there is a possibility that the distribution of the management apparatus contract information packet to the contract management apparatus 11 is limited in the contract management server 21. That is, when the contract management apparatus is registered in a revocation list as described in the steps S205 to S207 of FIG. 30, the management apparatus contract information is not distributed from the contract management server 21. In this case, the failure in the acquisition of the management apparatus contract information is displayed to end the whole processing (step S161). Alternatively, when the contract management apparatus is registered in the revocation list, the contract management server 21 transmits the message to the effect. Therefore, the message is displayed.

Although a periodic contract, for example, 1000 points per month, is possible in the present embodiment, the valid period of 1000 points is one month. In a new month, even when the points of the previous month are accumulated, the points of the previous month are not substantially used. However, any management apparatus contract information may be used in the present embodiment as long as the contract is managed by the output of the time key. Therefore, instead of overwriting the remaining points with the newly received point number, a method of adding the new point number to the remaining point number is also possible.

The basic part of the contract management apparatus 11 has been described.

Next, the variations of the contract management apparatus 11 will be described.

### 1.3.1 First Variation

The management apparatus contract information described in the above-described embodiment is the see/hear time and the point number objectively indicating the value of the contents for the simplicity of the description, but the management apparatus contract information is not limited to this case. For example, (not only in a case where the same contents are seen/heard but also in a case where the different contents are seen/heard) the information may limit the number of receiving devices with which the broadcasting contents can simultaneously be seen/heard. That is, the management apparatus contract information may also be information for limiting the maximum value of the number of receiving devices to which the contract management apparatus 11 distributes the time key via the home network 1 within a predetermined value.

The processing operation of the contract management apparatus 11 for using the number of receiving devices that can simultaneously be seen/heard as the management apparatus contract information to limit the number will briefly be described.

In this case, the management apparatus contract information transmitted to the contract management apparatus 11 from the contract management server 21 is the upper limit value of the number of receiving devices connected to the home network 1, and the channel contract shown in FIG. 1. The channel contract information sent to the contract management apparatus 11 designates the channel which can be seen/heard by a plurality of receiving devices connected to the home network in the same manner as in the channel contract information sent to each receiving device, and is determined, for example, by the contract.

When the control unit 202 of the contract management apparatus 11 receives the distribution request of the time key from the receiving device on the home network, the channel corresponding to the time key can be seen/heard based on the channel contract information. Additionally, at this time, when the number of receiving devices in the distribution destination of the time key does not satisfy the upper limit value, the time key is distributed to the receiving device that has requested the time key. In this case, the ID of the receiving device and the valid period of the outputted time key are recorded as a distribution history. It is to be noted that the distribution history is recorded, for example, in the memory disposed in the control unit 202.

On receiving the request from the receiving device, the control unit 202 judges whether or not to output the time key. That is, when the channel corresponding to the time key can be seen/heard, the distribution history is further referred to based on the channel contract information to check whether or not the ID of the receiving device for use in seeing/hearing pay contents in the time zone including the present time includes the ID of the receiving device that is a requester. If the ID is included, the time key is outputted. If it is not included, a value of a counter for counting the number of receiving devices being seen/heard is incremented by one. When the value of the counter is within the upper limit value determined by the management apparatus contract information, the output of the time key is permitted. When the value of the counter exceeds the upper limit value, the time key is not outputted.

It is to be noted that the management apparatus contract information may include the point number described in the above-described embodiment, and the information for limiting the number of receiving devices that can simultaneously be seen/heard as described in the first variation. Moreover, the channel contract information may also be included. When the management apparatus contract information includes the point number and the information limiting the number of receiving devices, the seeing/hearing by a plurality of receiving devices connected to the home network (the number of receiving devices simultaneously seen/heard, the value or the see/hear time of the seen/heard contents) can more strictly be managed.

Furthermore, the system of the present embodiment can slightly be changed to realize any management apparatus contract information other than the above-described information as long as the actual see/hear results by one or a plurality of receiving devices connected to the home network can objectively be judged.

### 1.3.2 Second Variation

As described in the second variation of the receiving device, the week key to be changed every week, the day key to be changed every day, and the program key to be changed every program may also be used in addition to the time key.

To realize this, the contract management apparatus 11 further includes the week key DB, day key DB, and program key DB in addition to the time key DB 205, and also further includes processing for acquiring the respective keys from the contract management server 21, and processing for judging the output in accordance with the management apparatus contract information in response to the request for each key from the receiving device to output the corresponding key only when judging that the output is possible. An effect from this mainly exists on the side of the receiving device.

### 1.3.3 Third Variation

The contract management apparatus 11 acquires the time key from the contract management server 21 periodically, for example, 15 minutes before the valid period of the time key is switched. However, it is not necessary to receive the time key from the contract management server 21, when there is not any see/hear receiving device on the home network 1. To solve the problem, for example, when there is not any receiving device in the see/hear state on the home network 1, the time key is not acquired. In this case, the time key does not exist in the contract management apparatus 11 with respect to the receiving device that first starts the seeing/hearing, and the contract management apparatus 11 needs to acquire the key from the contract management server 21. Therefore, although some time is required, the problem has almost been solved by the speeding-up of the dial-up line in recent years. Therefore, a further advanced system is also considered in which instead of acquiring the time key beforehand, the contract management apparatus 11 accesses the contract management server 21 to acquire the time key, only when there is an output request from the receiving device and the output is judged to be possible. With this constitution, the contract management apparatus 11 is consolidated only onto a function of managing the reception simply by the management apparatus contract information.

### 1.3.4 Fourth Variation

The contract management apparatus 11 periodically acquires the management apparatus contract information packet or the time key information packet from the contract management server 21. However, the constitution is not limited to this case, and a constitution in which the contract management server 21 periodically distributes these packets to each contract management apparatus 11 is also considered. In this case, the contract management server 21 can transmit the management apparatus contract information, time key, or the other week, day, or program key to each contract management apparatus 11 in accordance with a unique transmission schedule. Therefore, there is a merit that there is no eccentricity in the access. Moreover, a situation in which there are many accesses and much time is required in the response can also be avoided on the side of the contract management apparatus 11.

### 1.4 Contract Management Server

Next, the constitution and processing operation of the contract management server 21 of the present embodiment will be described with reference to the whole constitution diagram of the contract management server 21 shown in FIG. 29. For the processing operation of the contract management server 21 of the present embodiment, there are two types: distribution processing of the limited reception information such as the time key and the management apparatus contract information; and illegal see/hear detection processing.

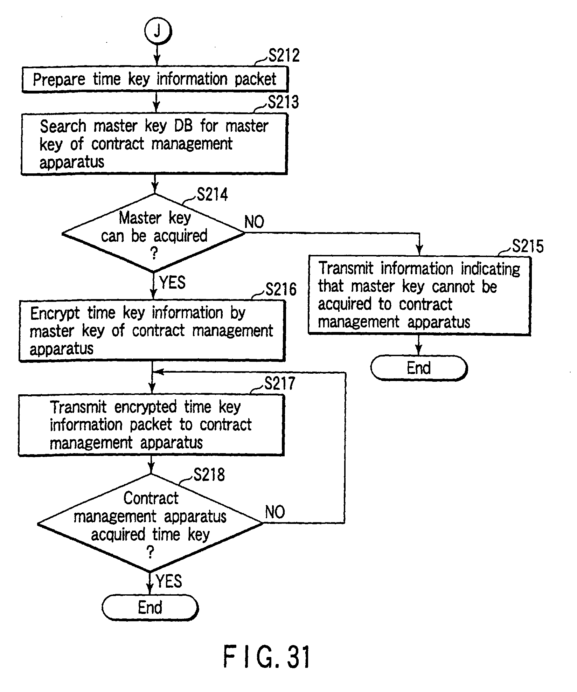

First, the distribution processing operation of the time key will be described with reference to flowcharts shown in FIGS. 30, 31.

The contract management server 21 receives the distribution request transmitted from the contract management apparatus 11 in the step S131 of FIG. 25 by a control unit 301 via the communication circuit on the dial-up network (step S201). In the request for the time key, the distribution request packet transmitted to the contract management server 21 may also include the information such as the channel identifier and valid period by which the time key is to be acquired.

The packet of the connection request is transferred to a mutual authentication unit 306, and the mutual authentication unit 306 performs the mutual authentication processing with the contract management apparatus 11 (step S202). This mutual authentication processing is performed, for example, by the challenge/response authentication in the same manner as in the above-described mutual authentication processing between the receiving device and the contract management apparatus 11.

When the validity on the other party side cannot be confirmed, and the authentication fails as the result of the mutual authentication processing (step S203), the information indicating this is transmitted to the contract management apparatus 11 to end the processing (step S204).

When the validity on the other party side is confirmed, and the authentication is successful as the result of the mutual authentication processing (step S203), a contract management unit 302 first uses the contract management apparatus ID obtained by the mutual authentication to search the revocation list stored in a revocation list storage unit 303 (step S205). Here, the revocation list indicates the IDs of contract management apparatuses which, it is considered, have performed illegal actions such as an illegal see/hear in order to eliminate the contract management apparatuses. In the present embodiment, the time key is not transmitted to the contract management apparatuses on the list to remove the apparatuses from a limited reception broadcasting service.

When the contract management apparatus ID exists in the revocation list, the processing is ended as such, or the information indicating that the time key cannot be distributed is transmitted to the contract management apparatus 11 to end the processing (step S207).

When the contract management apparatus ID does not exist in the revocation list (step S206), the contract management apparatus 11 is a proper contract management apparatus. In this case, a time key acquisition unit 307 searches a time key DB 311 for the time key satisfying the information based on the information such as the channel identifier and the valid period included in the request packet transmitted from the contract management apparatus 11 (step S208). When the requested time key does not exist (step S209), the information indicating that the time key cannot be acquired is transmitted to the contract management apparatus 11 to end the processing (step S210). When the key does not exist (step S209), the contract management unit 302 acquires this (step S211) to prepare a time key information packet having a packet format shown in FIG. 26A (step S212 of FIG. 31).

Next, the master key of the contract management apparatus which is a requester of the time key is searched from a master key DB 313 (using the ID of the contract management apparatus as the key) in order to encrypt the time key information packet (step S213). Here, when the master key does not exist (step S214), the information indicating that the master key does not exist is transmitted to the contract management apparatus 11 to end the processing (step S215). When the master key exists (step S214), the master key is acquired to encrypt the time key information of the time key information packet prepared beforehand (step S216).

The time key information packet encrypted here is transmitted to the contract management apparatus 11 from the control unit 301 (step S217).

When the time key information packet shown in FIG. 26A is transmitted to the contract management apparatus 11 from the contract management server 21, and is normally received by the contract management apparatus, the acquisition notice of the time key is transmitted from the contract management apparatus 11 in the step S138 of FIG. 25.

On receiving the acquisition notice of the time key transmitted from the contract management apparatus 11 in the step S138 of FIG. 25, the contract management server 21 ends the processing at this time (step S218). When the acquisition notice does not come, the transmission of the time key information packet is repeated several times until the acquisition notice comes. Even when the transmission is repeated the predetermined number of times, the acquisition notice is not received. Then, the processing is ended (steps S218, S217).

The distribution processing operation of the time key of the contract management server 21 has been described above.

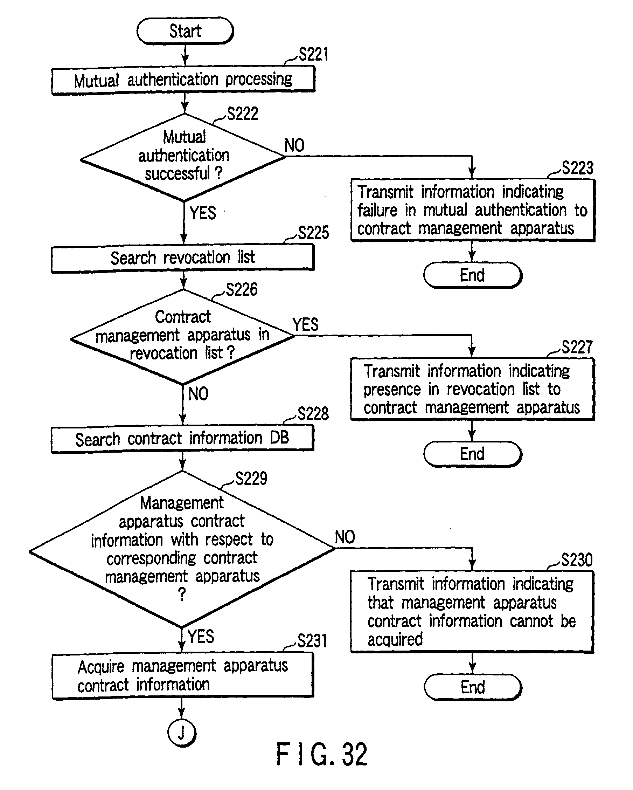

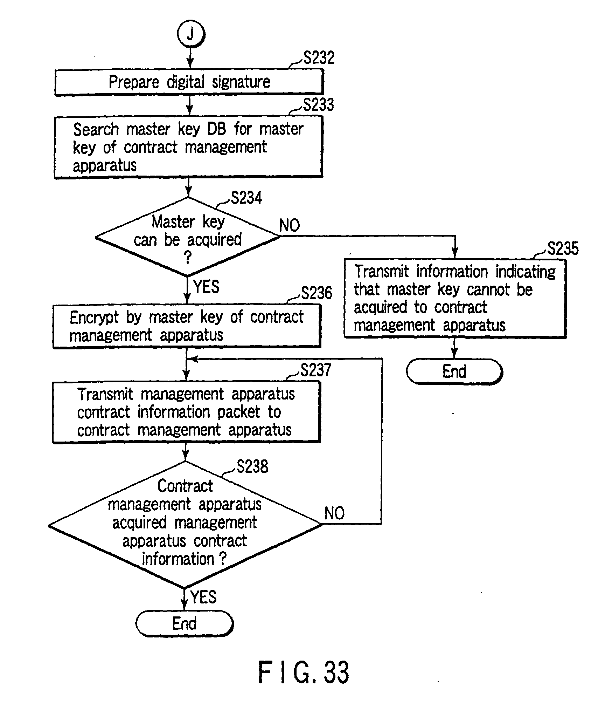

The distribution processing operation of the management apparatus contract information is substantially similar. Next, the distribution processing operation of the management apparatus contract information will be described with reference to flowcharts shown in FIGS. 32 and 33.

The distribution request transmitted to the contract management server 21 from the contract management apparatus 11 in the step S141 of FIG. 27 is received by the control unit 301 via the communication circuit on the dial-up network.

The packet of the connection request is transferred to the mutual authentication unit 306, and the mutual authentication unit 306 performs the mutual authentication processing with the contract management apparatus 11 (step S221). This mutual authentication processing is performed, for example, by the challenge/response authentication in the same manner as in the above-described mutual authentication processing between the receiving device and the contract management apparatus 11.

When the validity on the other party side cannot be confirmed, and the authentication fails as the result of the mutual authentication processing (step S222), the information indicating this is transmitted to the contract management apparatus 11 to end the processing (step S223).

When the validity on the other party side is confirmed, and the authentication is successful as the result of the mutual authentication processing (step S222), the contract management unit 302 first uses the contract management apparatus ID obtained by the mutual authentication to search the revocation list stored in the revocation list storage unit 303 (step S225).

When the contract management apparatus ID exists in the revocation list (step S226), the processing is ended as such, or the information indicating that the management apparatus contract information cannot be distributed is transmitted to the contract management apparatus 11 to end the processing (step S227).

When the contract management apparatus ID does not exist in the revocation list (step S226), the contract management apparatus 11 is the proper contract management apparatus. In this case, a contract information acquisition unit 308 searches a contract information DB 312 (step S228) to acquire the management apparatus contract information of the contract management apparatus 11.

When the management apparatus contract information of the contract management apparatus 11 does not exist in the contract information DB 312 (step S229), the information indicating that the management apparatus contract information cannot be distributed is transmitted to the contract management apparatus 11 to end the processing (step 5230) .

When the management apparatus contract information of the contract management apparatus 11 exists in the contract information DB 312 (steps S229, S231), the contract management unit 302 prepares the management apparatus contract information packet including the acquired management apparatus contract information in the form shown in FIG. 28. That is, the information identifier corresponding to the management apparatus contract information packet, the ID of the contract management apparatus of the distribution destination, and the acquired management apparatus contract information are transferred to a digital signature preparation unit 309. The digital signature preparation unit 309 uses the key selected from the keys stored in a signature preparation key storage unit 310 to prepare the digital signature from the identifier of the key (digital signature verification key identifier), the information identifier, the ID of the contract management apparatus, and the management apparatus contract information (step S232 of FIG. 33).

On receiving the digital signature prepared by the digital signature preparation unit 309 and the digital signature verification key identifier used at this time, the contract management unit 302 searches the master key of the contract management apparatus which is a requester of the management apparatus contract information from the master key DB 313 (using the ID of the contract management apparatus as the key) (step S233). Here, when the master key does not exist (step S234), the information indicating that the master key does not exist is transmitted to the contract management apparatus 11 to end the processing (step S235). When the master key exists (step S234), the management apparatus contract information, digital signature verification key identifier, and digital signature are encrypted by the master key to prepare the management apparatus contract information packet shown in FIG. 28 (step S236). The prepared management apparatus contract information packet is transmitted to the contract management apparatus 11 (step S237).

When the management apparatus contract information packet shown in FIG. 28 is transmitted to the contract management apparatus 11 from the contract management server 21, and is normally received by the contract management apparatus, the acquisition notice of the management apparatus contract information is transmitted from the contract management apparatus 11 in the step S151 of FIG. 27.

On receiving the acquisition notice of the management apparatus contract information transmitted from the contract management apparatus 11 in the step S151 of FIG. 27, the contract management server 21 ends the processing at this time (step S238). When the acquisition notice does not come, the transmission of the management apparatus contract information packet is repeated several times until the acquisition notice comes. Even when the transmission is repeated the predetermined number of times, the acquisition notice is not received. Then, the processing is ended (steps S238, 5237).

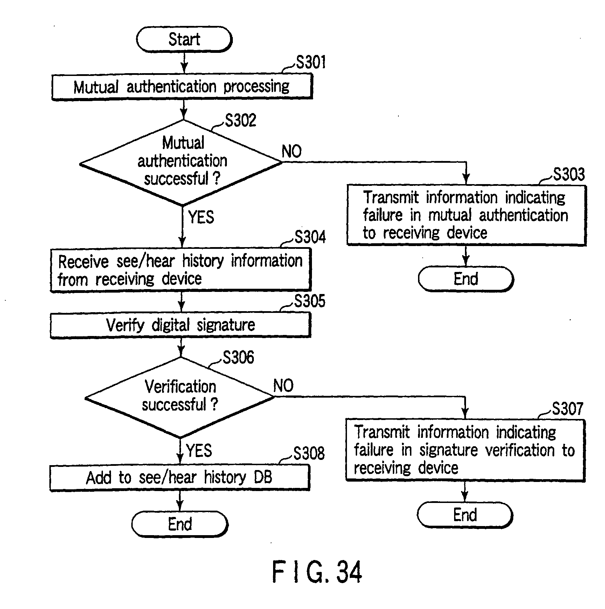

Next, an illegal see/hear detection processing operation will be described. The illegal see/hear detection processing is divided into two types: see/hear history information collection processing for collecting the see/hear history stored in the see/hear history DB 125 of each receiving device of each subscriber's house; and see/hear history collation processing. First, the see/hear history information collection processing operation will be described with reference to a flowchart shown in FIG. 34.

The contract management server 21 is connected to each receiving device of each subscriber's house. In this case, the home network 1 exists between the contract management server 21 and the receiving device, but the contract management apparatus 11 in this case only functions as a connection apparatus of the home network 1 such as the bridge, router, and gateway to the external network.

When connected to the receiving device, the control unit 301 of the contract management server 21 first performs the mutual authentication (step S301). The mutual authentication processing is performed, for example, by the challenge/response authentication in the same manner as in the above-described mutual authentication processing between the receiving device and the contract management apparatus 11.

When the validity on the other party side cannot be confirmed, and the authentication fails as a result of the mutual authentication processing (step S302), the information indicating this is transmitted to the receiving device to end the processing (step S303).

When the validity on the other party side is confirmed, and the authentication is successful as the result of the mutual authentication processing (step S302), a see/hear history check unit 304 receives a packet including see/hear history information (see/hear history information packet) from the receiving device (step S304).

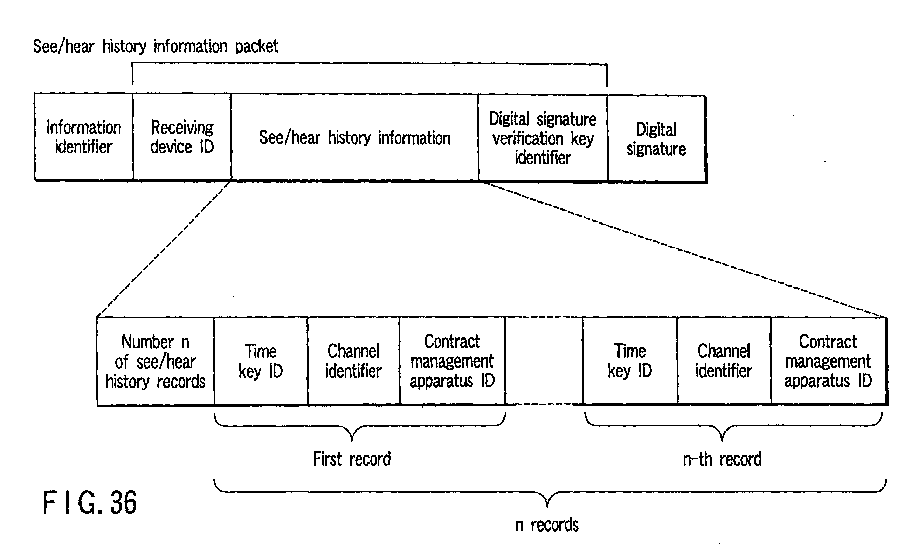

As described above, the see/hear history information is recorded in the see/hear history DB 125 every time the receiving device the time key from the connected contract management apparatus, and one record is constituted of the ID of the received time key, the channel identifier, and the ID of the contract management apparatus which has outputted the time key. The contract management unit 123 of the receiving device prepares a see/hear history information packet constituted as shown, for example, in FIG. 36.

The see/hear history information packet is constituted of the information identifier, the receiving device ID, a plurality of (n herein) records of a reception history, the digital signature verification key identifier, and the digital signature. The information identifier indicates that the packet is a packet for transmitting the see/hear history information. The receiving device ID is the identifier of the receiving device which is a transmitter of the packet. The digital signature verification key identifier indicates the identifier of the key for verifying the next digital signature. The range of digital signature includes the information identifier to the digital signature verification key identifier.

On receiving the see/hear history information packet as shown in FIG. 36, the see/hear history check unit 304 transfers the processing to a signature verification unit 305 in order to first verify the digital signature. The signature verification unit 305 searches a signature verification key DB 315 to acquire the signature verification key corresponding to the digital signature verification key identifier included in the packet, and verifies the digital signature (step S305). When the signature verification fails (step S306), there is a possibility that the see/hear history information collapses by forgery, tamper, reception trouble, and the like. Therefore, information indicating the failure in the signature verification is transmitted to the receiving device, and the processing is ended (step S307).

When the signature verification is successful (step S306), the see/hear history check unit 304 stores the receiving device ID and each record (contract management apparatus ID, channel identifier, time key identifier) of the see/hear history included in the packet in a see/hear history DB 314 to end the processing.

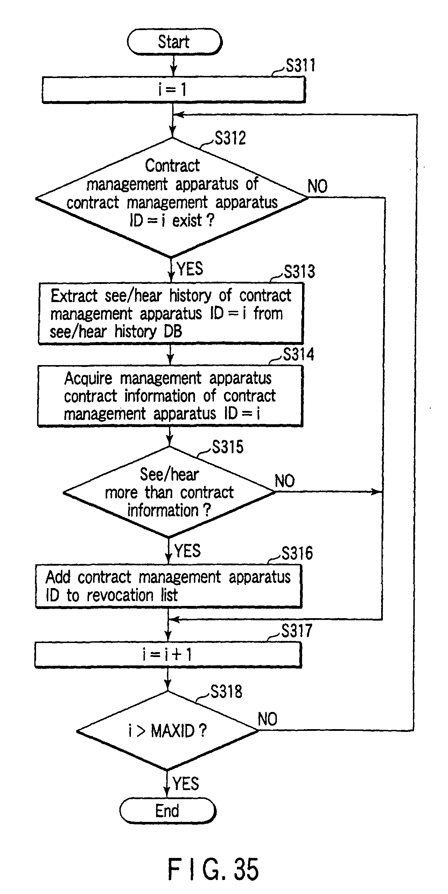

Next, the see/hear history collation processing operation will be described with reference to a flowchart shown in FIG. 35. This processing is periodically started in the see/hear history check unit 304. First, a variable i corresponding to the contract management apparatus ID is set to an initial value "1" (step S311), and the see/hear history information indicating the contract management apparatus ID of i is searched from the see/hear history DB 314. Here, the contract management apparatus ID is assumed to be "1" to "MAXID". When the see/hear history information corresponding to the contract management apparatus having ID of i does not exist in the see/hear history DB 314 as a result of search (step S312), the processing advances to step S317 to increment i by "1". When the updated i is not more than "MAXID" (step S318), the processing returns to the step S312, and the contract management apparatus ID of i is searched from the see/hear history DB 314.

When the see/hear history information corresponding to the contract management apparatus having ID of i exists in the see/hear history DB 314 as the result of the search (step S312), all the see/hear history information having the contract management apparatus ID of i is extracted from the see/hear history DB 314 (step S313). Next, the see/hear history check unit 304 searches the contract information DB 312 to acquire the management apparatus contract information for the contract management apparatus having i as ID (step S314).

The see/hear history check unit 304 compares the see/hear history information extracted from the see/hear history DB 314 with the management apparatus contract information extracted from the contract information DB 312 (e.g., compares the total number of points corresponding the time key in the see/hear history information with that of points given to the contract management apparatus 11) to check if a see/hear amount is in a range of the management apparatus contract information (e.g., within the number of points given by the total number of points corresponding to the see/hear amount). Here, when the amount is in the range of the see/hear contract (step S315), the processing advances to step S317 to increment i by one. When the updated i is not more than "MAXID" (step S318), the processing returns to the step S312 to search the see/hear history information having the contract management apparatus ID of i from the see/hear history DB 314.

When the subscription fee departs from the range of the management apparatus contract information in the step S315, it is meant that there is some illegal see/hear. Therefore, after adding the contract management apparatus ID of i to the revocation list (step S316), i is incremented by one (step S317). When i is not more than "MAXID" (step S318), the processing returns to the step S312 to search the see/hear history information having the contract management apparatus ID of i from the see/hear history DB 314.

It is to be noted that when i is incremented by one in the step S317, and i exceeds "MAXID" (step S318), the processing ends.

When the see/hear history information recorded in each receiving device is collated with the management apparatus contract information, the illegal action with respect to the contract management apparatus can be detected. When the action is detected, the ID of the contract management apparatus is registered in the revocation list, the distribution of the time key into the contract management apparatus is stopped thereafter.

It is to be noted that all the see/hear history information does not have to be collected from all the receiving devices, only a part of all the see/hear history information recorded by the receiving devices may be collected from some of all the receiving devices existing in the world. In this case, it is difficult to strictly detect the illegal see/hear, but a transmission amount of the see/hear history information can considerably be decreased.

### 1.4.1 Variation

Any of four variations described in the contract management apparatus 11 can be applied also to the contract management server 21, and further the similar effect is produced.

The first embodiment is applied to the limited reception system in which each receiving device has the individual master key, and this conforms to the standards of the limited reception of the CS or BS broadcasting (ARIB STD-B25) or the standards of the receiving device (ARIB STD-B21). However, in addition to the satellite broadcasting standards, a proposal of standards for realizing a satellite digital sound broadcasting in a 2.6 G band exists and is now under consideration.

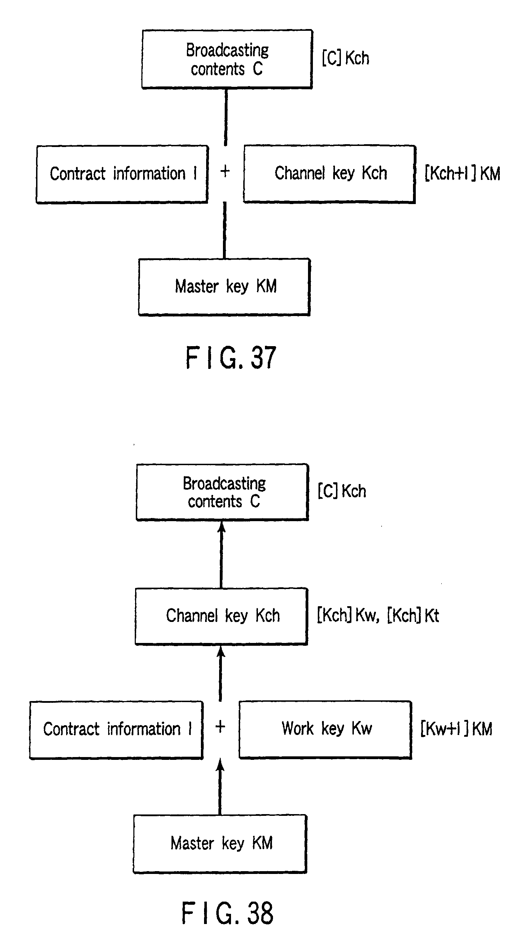

In this standard proposal, as shown in FIG. 37, the channel key is encrypted together with the contract information by a common master key (work key in the description of the standards). In this system, individual control information can be transmitted like common control information. Additionally, there is not any work key that has periodically been transmitted to each receiving device, and the contract is managed all by the receiving device contract information. Therefore, the transmission amount of the limited reception information is largely reduced. Therefore, this system is largely effective for a narrow band broadcasting such as a satellite digital sound broadcasting. Conversely, it is difficult to realize the satellite digital sound broadcasting by a system other than this system (e.g., refer to Jpn. Pat. Appln. KOKAI Publication No. 11-243536).

When the above-described embodiment is realized along the standard proposal for realizing the satellite digital sound broadcasting in the 2.6 G band, a change is required only for the receiving device. For example, the work key storage unit 111 is unnecessary in the constitution of the receiving device shown in FIG. 9. Moreover, in the flowchart shown in FIG. 11, the channel key output unit 108 first refers to the receiving device contract information in the contract judgment unit 121. As a result, when the see/hear of the channel is permitted, the channel key is outputted (steps S12 to S15). However, when the see/hear is not permitted (step S14), the steps S19, S20 of FIG. 11 are skipped to immediately advance to the step S21 of FIG. 12, and the time key storage unit 112 is searched (because all the channel keys are stored in the channel key storage unit 109 in the above-described standard proposal).

Moreover, the processing of and after the search processing of the time key shown in the flowcharts of FIGS. 12, 13 is substantially similar. However, in the above-described standard proposal, since the channel key surely exists in the channel key storage unit 109, without waiting until the common limited reception information encrypted by the acquired time key is received, the processing advances to the step S19 of FIG. 11 at the time of the acquisition of the time key in the step S2 of FIG. 12 or the step S35 of FIG. 13. The corresponding channel key is acquired from the channel key storage unit 109 (step S20), and is outputted to the descramble unit 107 (step S16).

That is, when the system is realized under the standard proposal (technically), the channel key can be acquired without acquiring the time key. Therefore, the information transmitted from the contract management apparatus 11 is not limited to the time key, and simply reception permission information may also be transmitted. In this manner, in the present embodiment, the time key outputted to the receiving device from the contract management apparatus 11 is changed to simple reception permission information representing the identifier of the channel that can be seen/heard. Accordingly, the processing for storing the see/hear history as shown in steps S36, S37 in FIG. 13 may also appropriately be modified.

Moreover, in the present embodiment, the realization of the function of using the time key distributed from the contract management apparatus 11 to acquire the channel key and decrypting the encrypted broadcasting contents to see/hear the contents has been described in the existing broadcasting service in which the channel key is acquired by the work key to decrypt and see/hear the encrypted broadcasting contents. However, as described as the first variation of the receiving device, the limited reception system is also possible in which the broadcasting contents can be seen/heard only by the latter function without using the existing broadcasting service. Additionally, in this case, the common limited reception information is not transmitted in which the channel key and the contract information are encrypted by the common master key (the work key in the description of the standards) as shown in FIG. 37. Therefore, all the channel keys are encrypted by the time key and transmitted. Therefore, in this case, a method only by the transmission of the above-described reception permission information cannot be applied.

The contract management server 21 can also appropriately be changed in accordance with the above-described variation of the receiving device or the contract management apparatus.

The first embodiment has been described above.

### 2. Second Embodiment

### 2.1 Constitution of the Whole System

In a second embodiment, the encrypted content decryption key Kch is distributed to each receiving device connected to the contract management apparatus 11 via the home network 1 from the contract management apparatus 11. Here, the present invention is applied to the limited reception system in which the respective receiving devices have the individual master keys. This will remarkably conceptually be described in the following embodiment, and conforms to the standards of the limited reception of the CS or BS broadcasting (ARIB STD-B25) or the standards of the receiving device (ARIB STD-B21). It is to be noted that many parts of the constitutions and processing operations of the receiving device, contract management apparatus 11, and contract management server 21 in the second embodiment are common with those in the first embodiment. Therefore, only different parts will mainly be described.

In the limited reception system of the second embodiment, the key constitution shown in FIG. 38 is used. This is largely different from the first embodiment shown in FIG. 2 in that the time key does not exist. In the second embodiment, the channel key Kch is encrypted by the work key and broadcasted/distributed, further encrypted by the shared key Kt between each receiving device and the contract management apparatus 11, and transmitted to each receiving device from the contract management apparatus 11 via the communication circuit.

In the second embodiment, the key distributed to the receiving device connected to the contract management apparatus 11 from the contract management apparatus 11 is changed to the channel key (frequently changing) from the time key, so that more flexible management of the contract is aimed at.

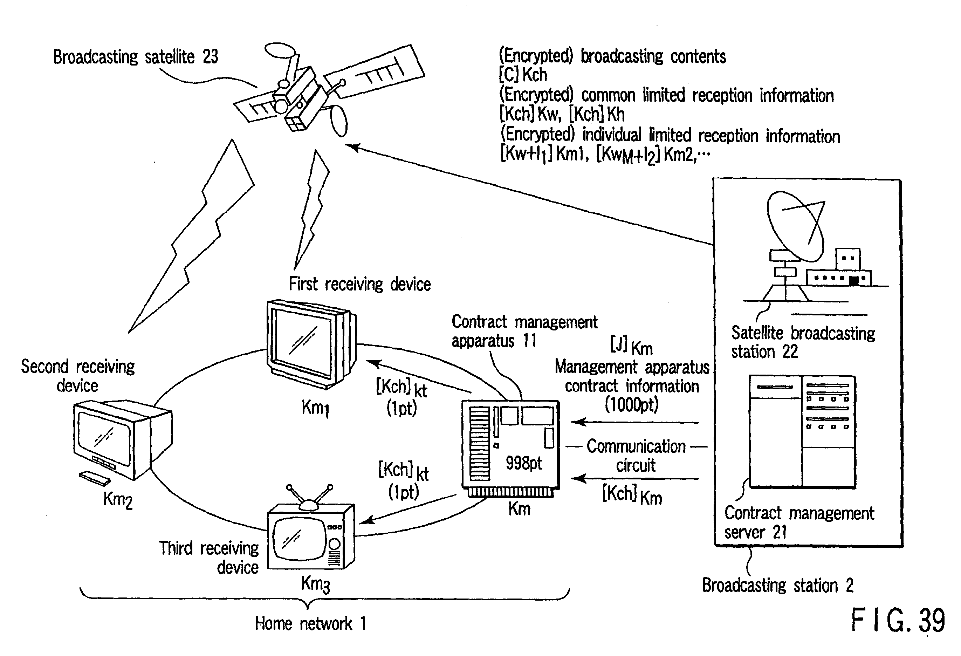

Next, the whole constitution of the limited reception system of the second embodiment will be described with reference to FIG. 39. It is to be noted that the same part as that of FIG. 3 is denoted with the same reference numerals

The limited reception system shown in FIG. 39 is roughly constituted of the home network (LAN) 1 in the subscriber's house, and the broadcasting station 2 which distributes the program information by channel (contents) or the key information to the subscriber's side in the same manner as in FIG. 3.

In FIG. 39, in the same manner as in FIG. 3, the home network 1 is connected to a plurality of (three herein) receiving devices (first to third receiving devices), and the contract management apparatus 11. The first to third receiving devices have master keys inherent in the respective devices, and the keys are denoted with Km1, Km2, Km3. The contract management apparatus 11 also has the master key inherent in the contract management apparatus 11, and the key is denoted with Km.

In the same manner as in FIG. 3, the broadcasting station 2 includes the contract management server 21, and the satellite broadcasting station 22.

The contract management server 21 is connected to the each subscriber's contract management apparatus 11 via the communication circuit on the dial-up network, and distributes the management apparatus contract information or the channel key to each contract management apparatus 11. The satellite broadcasting station 22 sends the encrypted broadcasting contents [C]Kch encrypted with the channel key Kch, the common limited reception information including the channel key [Kch]Kw encrypted with the work key Kw, the common limited reception information including the channel key [Kch]Kw encrypted with the work key Kw, the work key encrypted with the master key Kmi for each receiving device (i = 1 to 3, that is, the master keys corresponding to the first to third receiving devices are denoted with Km1, Km2, Km3), and the individual limited reception information including the receiving device contract information Ii for each receiving device (i = 1 to 3, that is, the receiving device contract information corresponding to the first to third receiving devices are denoted with I1, I2, I3) [Kw+Ii]Kmi toward the broadcasting satellite 23 in order to broadcast/distribute the information into each receiving device. The broadcasting satellite 23 sends each information transmitted from the satellite broadcasting station 22 to the broadcasting range of the satellite broadcasting.

It is to be noted that the first to third receiving devices will be referred to simply as the receiving devices, when the devices do not have to be especially distinguished.

Each receiving device selects the individual limited reception information for the device from the individual limited reception information transmitted from the satellite broadcasting station 22 via the broadcasting satellite 23 to decrypt the information with the master key Kmi of the device. The work key (or the bunch of work keys) and the receiving device contract information obtained as a result of decryption are stored in the nonvolatile memory of the receiving device.

When the specific channel is seen/heard with each receiving device, first it is checked by the held receiving device contract information whether or not the see/hear contract of the corresponding channel is made. When the see/hear contract is not made, the contract management apparatus 11 is requested to output the channel key Kch. In response to this request, the contract management apparatus 11 refers to the management apparatus contract information J held by the contract management apparatus 11 to determine whether or not to permit the output of the channel key. With the permission, the contract management apparatus 11 shares the key with the receiving device which has requested for the output of the channel key, and encrypts the channel key with the shared key Kt obtained as a result (this is represented by [Kch]Kt) to output [Kch]Kt to the receiving device of the requester. The receiving device which has received the channel key [Kch]Kt transmitted from the contract management apparatus 11 and encrypted by the shared key Kt decodes the key by the shared key Kt, and uses the channel key Kch obtained as a result to decrypt the contents to be broadcasted/distributed.

On the other hand, when the output of the requested channel key is not permitted, the contract management apparatus 11 transmits the information indicating this to the receiving device that is the requester to display a message indicating the see/hear is impossible on the side of the receiving device.

When the see/hear contract of the specific channel is made from the receiving device contract information held in each receiving device, the work key corresponding to the channel is held in the work key storage unit. Therefore, when the common limited reception information corresponding to the channel to be broadcasted/distributed is received, the work key is used to decrypt the encrypted common limited reception information, and the channel key of the specific channel is acquired.

In the same manner as in the first embodiment, there are three types of the packet for use in the limited reception system of the second embodiment: a content packet for distributing the broadcasting contents; a common limited reception packet for distributing common limited reception information; and an individual limited reception packet for distributing the individual limited reception information. However, for the common limited reception packet for use in the second embodiment, only one type of the first common limited reception packet shown in FIG. 5 is used to distribute the common limited reception information including the channel key encrypted by the work key.

When the acquisition of the channel key is successful in the receiving device, the encrypted broadcasting contents of the channel are decrypted to output the broadcasting contents.

The contract management apparatus 11 is connected to the contract management server 21 and the communication circuit on the dial-up network. It is to be noted that the communication circuit may also be a continuous connection circuit by internet in the same manner as in the first embodiment. Moreover, through this communication circuit, the encrypted management apparatus contract information [J]Km, and the encrypted channel key are received from the contract management server 21 periodically in accordance with the contract content. The management apparatus contract information J is encrypted by the master key Km of the contract management apparatus 11. The management apparatus contract information is similar to that of the first embodiment.

Moreover, when any receiving device existing in the home network 1 is in the see/hear state, the contract management apparatus 11 constantly acquires the channel key Kch from the contract management server 21. The channel key is encrypted by the master key Km of the contract management apparatus 11, and transmitted from the contract management server 21, and the contract management apparatus 11 decrypts the key by the master key Km held in the apparatus, and stores the key in a channel key DB 221.

Furthermore, when there is a request for the output of the channel key from the receiving device, the contract management apparatus 11 refers to the management apparatus contract information to determine whether or not the channel key of the channel requested to be outputted may be outputted. Here, a determining method is similar to that of the first embodiment.

In this constitution, in the same manner as in the first embodiment, the subscription fee is collected with respect to the see/hear of the channel and see/hear period designated in each receiving device by the contract. Additionally, the subscription fee can securely be collected in accordance with the value or the see/hear time of the content information seen/heard using the channel key distributed from the contract management apparatus 11 in a plurality of receiving devices connected to the home network.

The outline of the limited reception system of the second embodiment has been described above. It is to be noted that the mutual authentication is required between the receiving device and the contract management apparatus 11 and between the contract management apparatus 11 and the contract management server 21.

Moreover, the present system is a model in which the contract management apparatus 11 substantially managing the contract is reliable. Therefore, if the contract management apparatus 11 is attacked, and all the channel keys spread in the world, the situation where the pay broadcasting is not established is also predicted.

To solve the problem, also in the second embodiment, in the same manner as in the first embodiment, the see/hear history of each receiving device is periodically transmitted to the contract management server 21 to check whether or not the content is seen/heard more than contracted. If the illegal see/hear is found by this means, it is determined that the contract management server 21 does not transmit any channel key to the contract management apparatus 11 which manages the receiving device.

### 2.2 Receiving Device

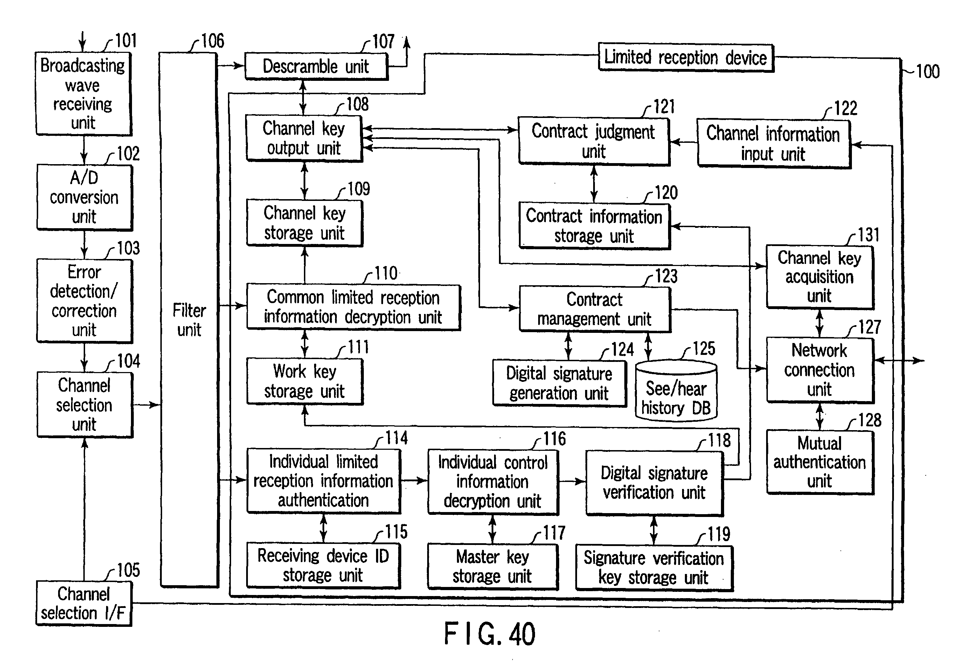

The constitution example of the receiving device in the limited reception system of the present embodiment shown in FIG. 3 is shown in FIG. 40. It is to be noted that in FIG. 40, the same parts as those of FIG. 9 are denoted with the same reference numerals, and only a different part will be described. That is, in FIG. 40, the time key storage unit 112 and time key search unit 113 of FIG. 9 are omitted, and a channel key acquisition unit 131 is disposed in FIG. 40 instead of the time key acquisition unit 126 of FIG. 9.

It is to be noted that the packets for use in this limited reception system include: the content packet for distributing the broadcasting contents of FIG. 4; the first common limited reception packet (hereinafter referred to simply as the common limited reception packet) including the channel key encrypted by the work key to distribute the common limited reception information as shown in FIG. 5; and the first individual limited reception packet (hereinafter referred to simply as the individual limited reception packet) including the work key encrypted by the master key by the receiving device and the receiving device contract information to distribute the individual limited reception information as shown in FIG. 7. Further in the second embodiment, all the information is the data represented by the fixed length in the same manner as in the first embodiment.

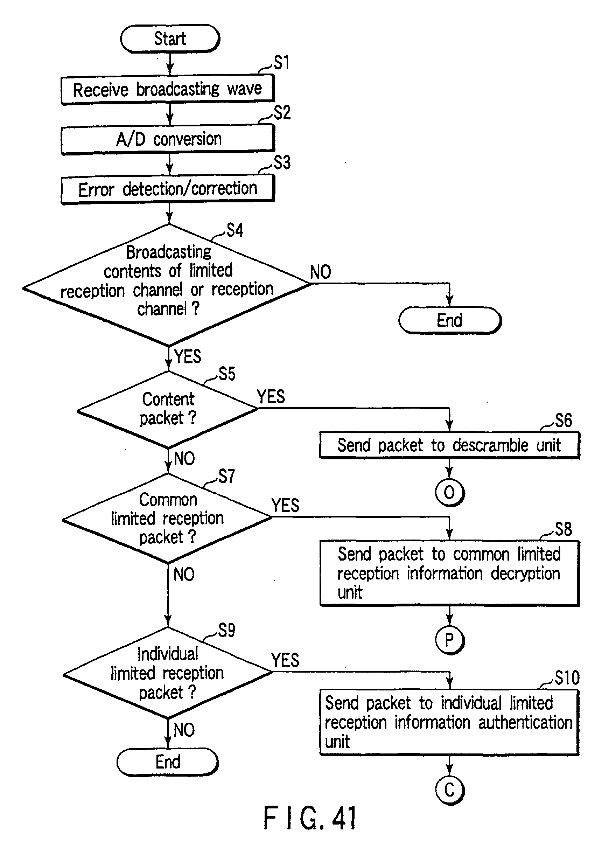

Next, the constitution and processing operation of the broadcasting receiving device (receiving device) of the second embodiment will be described with reference to the whole constitution diagram shown in FIG. 40 together with flowcharts shown in FIGS. 41 to 45. It is to be noted that in FIGS. 41 to 45, the same parts as those of FIGS. 10 to 15 are denoted with the same reference numerals.

In the same manner as in the first embodiment, the receiving device receives the broadcasting wave via the broadcasting receiving unit 101 (step S1 of FIG. 41), and converts the analog signal to the digital data in the A/D conversion unit 102 (step S2). The digital data is sent to the error detection/correction unit 103 to detect/correct the error (step S3). Thereafter, with the limited reception channel for distributing the broadcasting packets such as the content packet of the reception channel, the individual limited reception packet, or the common limited reception packet (step S4), the information identifier of each broadcasting packet is referred to in judging any of the individual limited reception packet, common limited reception packet, and content packet, and the processing is accordingly branched and advanced as follows. When the content packet, the individual limited reception packet or common limited reception packet of the reception channel is not received in the step S4, the processing is stopped.

With the content packet (step S5), the channel being seen/heard is obtained via the channel selection I/F 105, and only the see/hear channel is transmitted to the filter unit 106 by the channel selection unit 104. The filter unit 106 sends the channel to the descramble unit 107 (step S6).

With the common limited reception packet (step S7), the packet is sent to the common limited reception information decryption unit 110 of the limited reception device 100 via the channel selection unit 104 and filter unit 106 to start the decryption (step S8).

With the individual limited reception packet (step S9), the packet is sent to the individual limited reception information authentication unit 114 of the limited reception device 100 via the channel selection unit 104 and filter unit 106 (step S10).

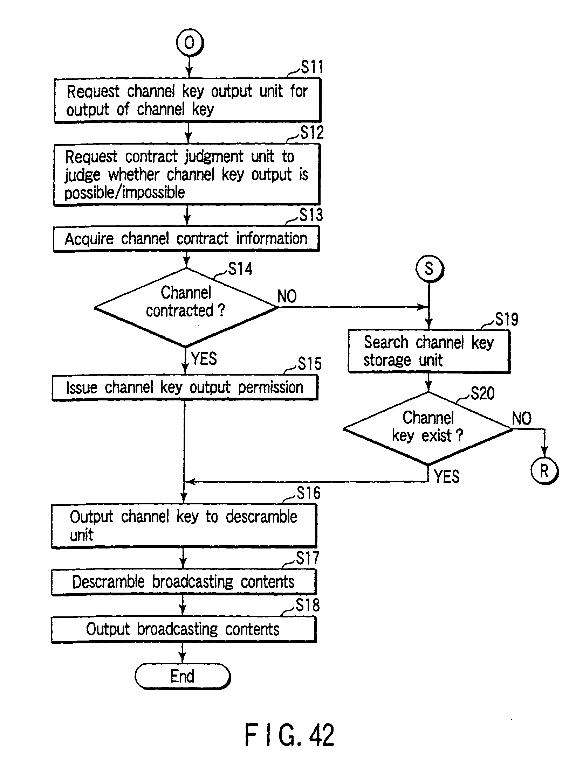

Next, the processing concerning the content packet will be described in detail with reference to the flowcharts of FIGS. 42 to 44.

The content packet sent to the descramble unit 107 from the filter unit 106 in the step S6 of FIG. 41 transmits the channel and channel key identifiers to the channel key output unit 108 of the limited reception device 100 to request for the output of the channel key (step S11).

In the limited reception device 100, the channel key output unit 108 first uses the channel identifier as the key to confirm whether or not the channel is see/hear-contracted with respect to the contract judgment unit 121 (step S12). The contract judgment unit 121 refers to the channel contract information (receiving device contract information) stored in the contract information storage unit 120 and shown in FIG. 1 (step S13) to judge whether or not the channel corresponding to the received channel identifier is see/hear-contracted (step S14). When the channel corresponding to the channel identifier is judged to be capable of being seen/heard (step S15), the channel key output unit 108 uses the channel and channel key identifiers as the key to search the channel key storage unit 109. As a result of the search, when the channel key exists, the channel key is taken out, and outputted to the descramble unit 107 (step S16). The descramble unit 107 uses the received channel key to descramble the broadcasting contents (step S17), and the broadcasting contents are outputted (step S18), thereby ending the processing.

Even when the channel is not see/hear-contracted in the step S14, the channel key of the channel is sometimes obtained from the contract management apparatus 11, or is sometimes already obtained. Therefore, the channel key output unit 108 first searches the channel key storage unit 109 to check the presence of the channel key of the channel (step S19). When the channel key exists (step S20), the flow advances to step S16 to output the channel key to the descramble unit 107. The broadcasting contents are descrambled to output the broadcasting contents, and the processing ends (steps S17, S18).

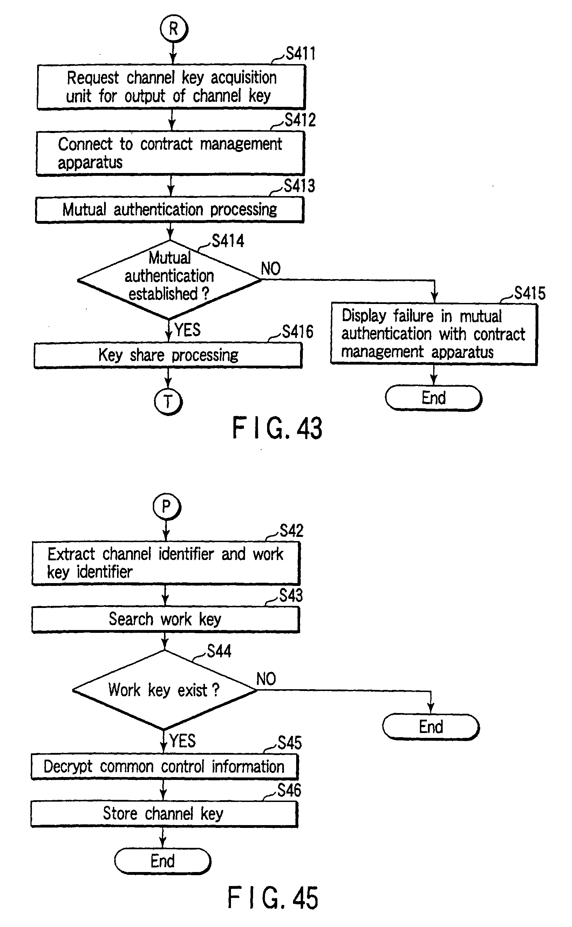

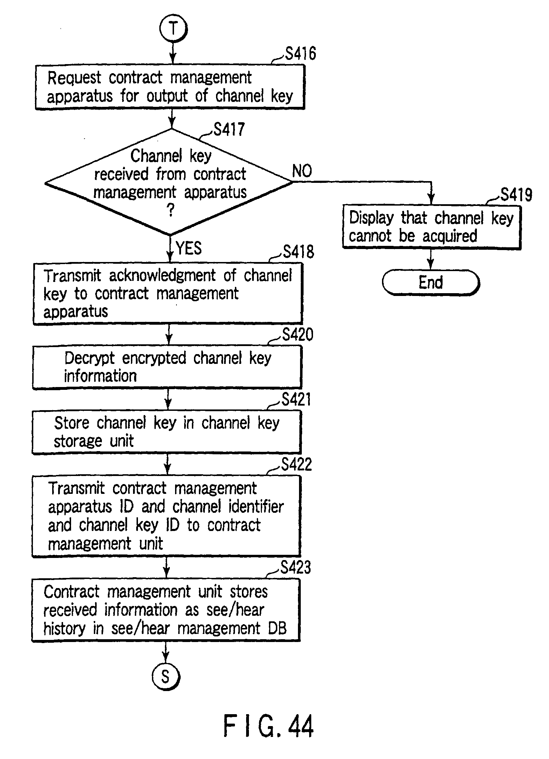

It is assumed that the channel is not see/hear-contracted in the step S14, and the channel key does not exist even with the search of the channel key storage unit 109 in step S20. In this case, the processing operation shown in FIGS. 43 and 44 is performed so as to output the desired channel key from the contract management apparatus 11.

First in the channel key output unit 108, the channel identifier of the channel is used as the key to request the channel key acquisition unit 131 to output the channel key (step S411 of FIG. 43).

On receiving this request, the channel key acquisition unit 131 is first connected to the contract management apparatus 11 connected to the home network via the network connection unit 127 so as to output the channel key (step S412). Here, the mutual authentication unit 128 carries out the mutual authentication in order to confirm that the connected end is the proper contract management apparatus 11 and to allow the contract management apparatus 11 side to confirm the connection to the proper receiving device (step S413). The mutual authentication processing is performed by the challenge/response method in the same manner as in the mutual authentication processing in the step S27 of FIG. 12.

It is to be noted that when the mutual authentication fails (step S414), the receiving device displays that the mutual authentication with the contract management apparatus 11 fails (step S415), and the receiving device performs the key share processing to have the common key Kt together with the contract management apparatus 11 (step S416). The key share processing is similar to that of step S30 of FIG. 12.

By the key share processing, the receiving device and contract management apparatus 11 connected to each other obtain the shared key Kt for transmitting/receiving the channel key.

Thereafter, the receiving device requests the contract management apparatus 11 to output the channel key (step S416 of FIG. 44). In response to this request, the contract management apparatus 11 outputs the packet (channel key information packet) for transmitting channel key information including the channel key encrypted by the shared key Kt. When the receiving device receives the channel key information packet (step S417), the receiving device transmits the acknowledgment to the contract management apparatus 11 (step S418). When the packet cannot be received (step S417), it is displayed that the channel key cannot be acquired (step S419).

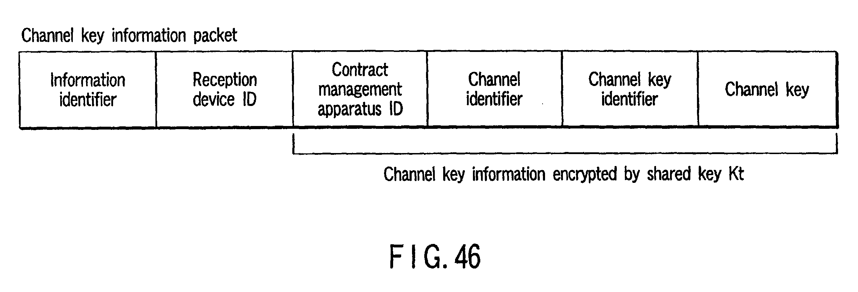

The channel key information packet includes a data structure shown in FIG. 46, and is constituted of the information identifier, receiving device ID, contract management apparatus ID, channel identifier, channel key identifier, and channel key. The contract management apparatus ID, channel identifier, channel key identifier, and channel key are encrypted by the shared key Kt.

The information identifier is information indicating that the packet is a channel key information packet, and the receiving device ID is the ID of the receiving device which is a transmission destination of the channel key information packet (which is to receive the packet). The receiving device ID is transmitted to the contract management apparatus 11 from the receiving device at the time of the mutual authentication in the step S413 of FIG. 43.

The contract management apparatus ID is an identifier of the contract management apparatus which has transmitted the channel key information packet. The channel identifier is an identifier of the channel of the channel key transmitted by the packet, and the channel key identifier is an identifier of the channel key.

Next, on receiving the channel key information packet shown in FIG. 46, the channel key acquisition unit 131 decrypts the channel key information encrypted in the packet by the shared key Kt (step S420). The decrypted channel key information is transferred to the channel key output unit 108. The channel key output unit 108 stores the channel key information (e.g., the information including the channel identifier, channel key identifier, and channel key) in the channel key storage unit 109 (step S421), and further outputs the contract management apparatus ID, channel identifier, and channel key identifier to the contract management unit 123 (step S422). The contract management unit 123 stores the received contract management apparatus ID, channel identifier, and channel key as the see/hear history in the see/hear history DB 125 (step S423).

Every time the channel key is outputted to the receiving device from the contract management apparatus 11, the contract management apparatus ID of the contract management apparatus that has outputted the channel key, and the channel identifier and channel key identifier corresponding to the channel key are stored as the see/hear history in the see/hear history DB 125 of the receiving device that has received the key. By this see/hear history, the time zone in which the channel was seen/heard by the receiving device, the channel, and the contract management apparatus that outputted the key (channel key) can be seen. These information can be used, if there is any illegal see/hear.

Additionally, when the above-described processing ends, and the desired channel key is stored in the channel key storage unit 109, the processing returns to the step S19 of FIG. 42. The channel key output unit 108 searches the channel key storage unit 109 (step S19), and finds the channel key (step S20). The processing advances to the step S16 to output the channel key to the descramble unit 107, so that the broadcasting contents of the channel are seen/heard (steps S17, S18).

Next, the processing operation concerning the common limited reception packet will be described with reference to the flowchart shown in FIG. 45.

It is to be noted that in the second embodiment, the second common limited reception packet encrypted by the time key as shown in FIG. 6 does not exist, and therefore the type of the common limited reception information does not have to be judged. Therefore, the present invention is different from the first embodiment in that there are not the processing of the steps S41, s47 to S51 of FIG. 14.

That is, as described above, when the common limited reception packet is sent to the common limited reception information decryption unit 110 from the filter unit 106 (step S8 of FIG. 40), the common limited reception information decryption unit 110 extracts the channel identifier and work key identifier from the non-encrypted portion in the packet (step S42 of FIG. 45), and searches the work key corresponding to the channel identifier and the work key identifier from the work key storage unit 111 (step S43).

When the work key is not stored in the work key storage unit 111 (step S44), the processing concerning the packet is ended in this stage. When the work key is stored in the work key storage unit 111, the common limited reception information decryption unit 110 takes the work key from the work key storage unit 111, and uses the key to decrypt the encrypted common limited reception information (step S45). The channel key Kch is acquired from the decrypted common limited reception information, and stored in the channel key storage unit 109 (step S46).

The processing concerning the individual limited reception packet is similar to that of the first embodiment (see FIG. 15).

Here, the contract management unit 123 will be described. As described above (step S423 of FIG. 44), the contract management unit 123 stores the see/hear history (the ID of the channel key, the channel identifier, and the contract management apparatus ID of the contract management apparatus which outputted the channel key) in the see/hear history DB 125 every time the receiving device receives the channel key outputted from the contract management apparatus 11.

Furthermore, the contract management unit 123 periodically transmits the see/hear history information (the information including one record constituted of the contract management apparatus ID, channel identifier, and channel key identifier) stored in the see/hear history DB 125 to the contract management server 21 via the network connection unit 127.

For the receiving device of the second embodiment, in the same manner as in the first embodiment, the channel key transmitted from the contract management apparatus 11 is used to perform the see/hear other than the periodic see/hear by the receiving device contract information. The see/hear by a plurality of receiving devices connected to the home network is managed by the contract management apparatus 11 in the same manner as in the first embodiment. However, it is necessary to detect a situation in which the contract management apparatus 11 is altered and the contract cannot accordingly accurately be managed. To solve the problem, the contract management unit 123 is disposed in the receiving device also in the second embodiment. That is, the contract management unit 123 stores the see/hear history information and periodically transmits the information to the contract management server 21 through the network such as internet connecting the home network to the contract management server 21. It is to be noted that during the transmission of the see/hear history to the contract management server from the receiving device, the history is necessarily transmitted via the contract management apparatus 11. In this case, the contract management apparatus 11 simply performs a function of a home server for connecting the external network to the home network. That is, for the processing other than conversion to the packet including the data structure suitable for the specifications of the external network, the content of the transmitted information is not related or processed.

In the same manner as the first embodiment, on receiving the see/hear history information, the contract management server 21 collates the information with the management apparatus contract information transmitted to the contract management apparatus 11 to check whether or not there is any contradiction.

Here, when it is apparent that the information is seen/heard more than the management apparatus contract information (point number) transmitted to the contract management apparatus 11, there is a possibility that the contract management apparatus 11 is illegally used. Therefore, the illegal see/hear is inhibited by means for discontinuing the transmission of the channel key to the contract management apparatus 11.

It is to be noted that the digital signature prepared by the receiving device ID and the secret key of the receiving device is attached to the see/hear history information packet transmitted to the contract management server 21 (see FIG. 36). This prevents another impersonation, and the correct see/hear history can be transmitted.

The basic constitution and processing operation of the receiving device according to the second embodiment have been described above. The variations of the receiving device can all be applied except the second variation of the first embodiment, and the similar effect is produced.

Here, the application of the first variation of the receiving device of the first embodiment to the receiving device of the second embodiment will supplementally be described. In the second embodiment, each receiving device has not only a function of acquiring the channel key by the work key to decrypt and see/hear the encrypted broadcasting contents but also a function of using the channel key distributed from the contract management apparatus 11 to decrypt and see/hear the encrypted broadcasting contents. For each receiving device, the limited reception system in which the broadcasting contents are seen/heard with only the latter function is also possible. That is, when the broadcasting contents are seen/heard only by the channel key distributed to each receiving device from the contract management apparatus 11 via the home network, only the encrypted broadcasting contents shown in FIG. 4 are broadcasted/distributed. The common limited reception packet or the individual limited reception packet does not have to be received by each receiving device.

On receiving the content packet (step S5 of FIG. 41), each receiving device skips the steps S13 to S15 of FIG. 42. When the desired channel key does not exist in the channel key storage unit 109, the contract management apparatus 11 is requested to acquire the desired channel key, and the received contents are decrypted (see FIGS. 42 to 44).

### 2.3 Contract Management Apparatus

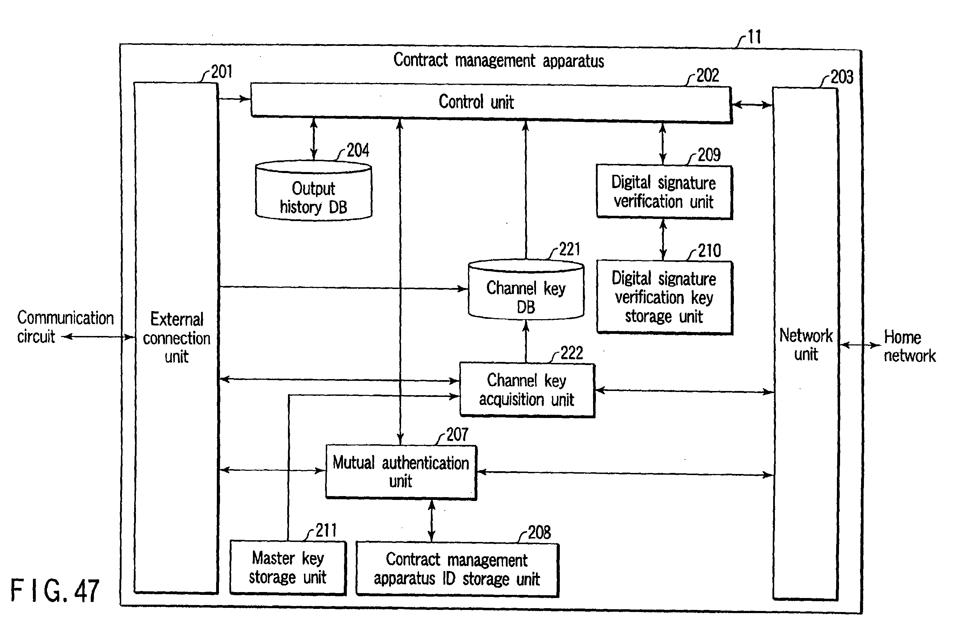

FIG. 47 shows the constitution example of the contract management apparatus according to the second embodiment. It is to be noted that in FIG. 47 the same parts as those of FIG. 20 are denoted with the same reference numerals, and only the different respects will be described. That is, for the contract management apparatus 11 of the second embodiment, the time key DB 205 of the contract management apparatus 11 shown in FIG. 20 of the first embodiment is replaced with the channel key DB 221, and the time key acquisition unit 206 is replaced with a channel key acquisition unit 222. Also for the processing operation and the constitution of the packet, when the time key is replaced with the channel key in the description of FIG. 20, the description relates to the contract management apparatus 11 constituted as shown in FIG. 47 as such.

This is because in the second embodiment, the see/hear is managed by the control of the output of the channel key instead of managing the see/hear by the output control of the time key (as in the first embodiment). Additionally, since the function of the time key is different from that of the channel key (in the limited reception system) in the constitution of the receiving device, changes shown in FIGS. 39 to 45 are required.

Moreover, all the variations other than the second variation of the contract management apparatus of the first embodiment can be applied, and the similar effect is produced.

### 2.4 Contract Management Server

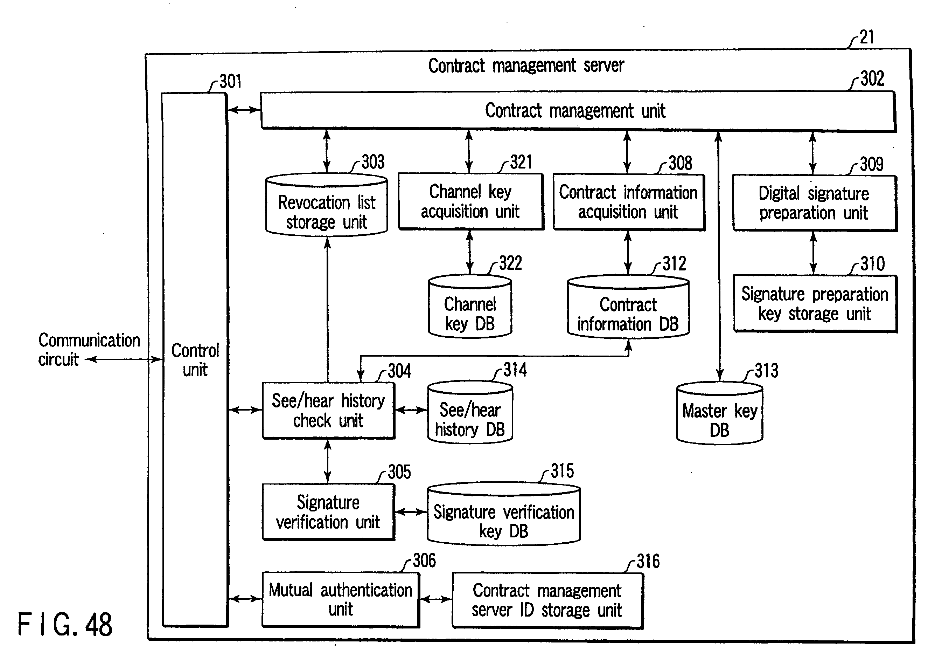

FIG. 48 shows the constitution example of the contract management server 21 according to the second embodiment. It is to be noted that in FIG. 48 the same parts as those of FIG. 29 are denoted with the same reference numerals, and only the different respects will be described. That is, for the contract management server 21 of the second embodiment, the time key DB 311 of the contract management server 21 shown in FIG. 29 of the first embodiment is replaced with a channel key DB 322, and the time key acquisition unit 307 is replaced with a channel key acquisition unit 321. Also for the processing operation and the constitution of the packet, when the time key is replaced with the channel key in the description of FIG. 29, the description relates to the contract management server 21 constituted as shown in FIG. 48 as such.

This is because in the second embodiment, the see/hear is managed by the control of the output of the channel key instead of managing the see/hear by the output control of the time key (as in the first embodiment).

Moreover, all the variations other than the second variation (the case where the week, day, or program key is used except the time key) of the first embodiment can be applied, and the similar effect is produced.

### 2.5 Others

The second embodiment is applied to the limited reception system in which the key receiving devices have the individual master keys, and conforms to the standards of the limited reception of the CS or BS broadcasting (ARIB STD-B25) or the standards of the receiving device (ARIB STD-B21). However, in addition to the satellite broadcasting standards, the proposal of the standards for realizing the satellite digital sound broadcasting in the 2.6 G band exists and is now under consideration.

In this standard proposal, as shown in FIG. 37, the channel key is encrypted together with the contract information by the common master key (the work key in the description of the standards). In this system, the individual information can be transmitted as if the common information. Additionally, there is not any work key that has periodically been transmitted to each receiving device, and the contract is managed all by the receiving device contract information. Therefore, the transmission amount of the limited reception information is largely reduced. Therefore, this system is largely effective for the narrow band broadcasting such as the satellite digital sound broadcasting. Conversely, it is difficult to realize the satellite digital sound broadcasting by this system (e.g., refer to the Jpn. Pat. Appln. KOKAI Publication No. 11--243536).

When the second embodiment is realized along the standard proposal for realizing the satellite digital sound broadcasting in the 2.6 G band, the change is required only for the receiving device. For example, the work key storage unit 111 is unnecessary in the constitution of the receiving device shown in FIG. 40. Moreover, in the flowchart shown in FIG. 42, the channel key output unit 108 first refers to the receiving device contract information in the contract judgment unit 121. As a result, when the see/hear of the channel is permitted, the channel key is outputted (steps S12 to S15). However, when the see/hear is not permitted (step S14), the steps S19, S20 of FIG. 42 are skipped to immediately advance to the step S411 of FIG. 43, and the contract management apparatus 11 is requested to output the channel key (because all the channel keys are stored in the channel key storage unit 109 in the above-described standard proposal).

Moreover, the processing of and after the acquisition processing of the channel key shown in the flowcharts of FIGS. 43, 44 is substantially similar. However, in the above-described standard proposal, the channel key surely exists in the channel key storage unit 109. Therefore, when the system is realized under the standard proposal (technically), the channel key can be acquired without acquiring the channel key from the contract management apparatus 11. Therefore, the information transmitted from the contract management apparatus 11 is not limited to the channel key, and simply the reception permission information may also be transmitted.

In this manner, in the second embodiment, the channel key outputted to the receiving device from the contract management apparatus 11 is changed to the simple reception permission information representing the identifier of the channel that can be seen/heard. Accordingly, the processing for storing the see/hear history as shown in steps S422, S423 in FIG. 44 may also appropriately be modified.

Moreover, in the second embodiment, the realization of the function of using the channel key distributed from the contract management apparatus 11 to decrypt the encrypted broadcasting contents and to see/hear the contents has been described in the existing broadcasting service in which the channel key is acquired by the work key to decrypt and see/hear the encrypted broadcasting contents. However, as described as the first variation of the receiving device of the first embodiment, the limited reception system is also possible in which the broadcasting contents can be seen/heard only by the latter function without using the existing broadcasting service. Additionally, in this case, the common limited reception information is not transmitted in which the channel key and the contract information are encrypted by the common master key (the work key in the description of the standards) as shown in FIG. 37. Therefore, all the channel keys are encrypted by the master key of the contract management apparatus, and transmitted. Therefore, in this case, the method only by the transmission of the above-described reception permission information cannot be applied.

In the limited reception system in which only the channel key distributed from the contract management apparatus 11 is used to decrypt and see/hear the encrypted broadcasting contents, only the content packet shown in FIG. 4 is broadcasted/distributed. Each receiving device receives and uses the channel key (encrypted by the shared key shared between the receiving device and the contract management apparatus 11) from the contract management apparatus 11 via the home network 1 to decrypt the broadcasted/distributed contents. Therefore, for the receiving device, in the constitution shown in FIG. 40, the constituting portion for carrying out the processing with respect to the individual limited reception packet, the constituting portion for performing the processing with respect to the common limited reception packet, the contract judgment unit 121, the contract information storage unit 120, and the like are unnecessary. Moreover, the see/hear in each receiving device is managed only in the contract management apparatus 11. That is, based on the management apparatus contract information (e.g., the upper limit value of the points) transmitted to the contract management apparatus 11 from the contract management server 21, the channel key is distributed via the home network in response to the requests from the broadcasting receiving devices until the total value of the points corresponding to the value, the see/hear time, or the combination of these of the content information seen/heard (using the channel key distributed from the contract management apparatus 11) becomes equal to the predetermined upper limit value in the plurality of receiving devices connected to the home network.

It is to be noted that as described in the first variation of the contract management apparatus of the first embodiment, for the management apparatus contract information, instead of or together with the point number, the information limiting the number of receiving devices capable of simultaneously seeing/hearing the broadcasting contents or the channel contract information may also be used.

The contract management server 21 can also appropriately be changed in accordance with the variations of the receiving device or the contract management apparatus.

The method of the present invention described in the embodiments of the present invention may also be stored and distributed as a program executable by a computer in recording mediums such as magnetic disks (flexible disk, hard disk, and the like), optical disks (CD-ROM, DVD, and the like), and semiconductor memories.

It is to be noted that the present invention is not limited to the above-described embodiments as such, and constituting elements can be modified and embodied without departing from the scope in an execution stage. Various inventions can be formed by appropriate combinations of a plurality of constituting elements described in the above-described embodiments. For example, several constituting elements may also be omitted from all the constituting elements described in the embodiments. Furthermore, the constituting elements over the different embodiments may appropriately be combined.

## Claims

1. A contract management apparatus (11) for use in a broadcasting system including one or more receivers (100 to 107) which receive encrypted contents from a broadcasting network (23), and a contract management server (21) which manages use of the contents in accordance with a contract content, the contract management apparatus (11) connected to the one or more receivers (100 to 107) and the contract management server (21) via separate networks, the apparatus (11) **characterized by** comprising:
a first acceptance unit (201) configured to accept contract information including a consent to use of the contents, use conditions and decryption information distributed from the contract management server (21);
a first memory (202) in which the contract information and the decryption information are stored;
a second acceptance unit (203) configured to accept a request for the decryption information required to decrypt the encrypted contents, the request transmitted from at least one of the receivers (100 to 107);
a distribution unit (203) configured to distribute the decryption information to the at least one of the receivers which requests the decryption information;
an information generation unit (202) configured to generate use situation information based on any of a value of the contents, a use time thereof, a number of receivers to which the decryption information has been distributed, and a combination of them, the contents being decrypted by the distributed decryption information in response to the request for the decryption information;
a second memory (204) in which the use situation information is stored;
a determination unit (202) configured to determinate whether or not the consent to use of the contents is permitted based on the contract information and the use situation information in response to the request for the decryption information; and
a control unit (202) configured to control distributing of the decryption information by the distribution unit (203) based on a determinate result of the determination unit.

2. The contract management apparatus (11) according to claim 1, **characterized in that** key information is used for the decryption information in a case where the broadcasting network (23) broadcasts an encrypted key to decrypt the encrypted contents together with the encrypted contents, and the contract management server (21) distributes the key information to decrypt the encrypted key.

3. The contract management apparatus (11) according to claim 1, **characterized in that** key is used for the decryption information in a case where the contract management server (21) distributes the key to decrypt the encrypted contents.

4. The contract management apparatus (11) according to claim 1, **characterized in that** limited key information is used for the decryption information in a case where the broadcasting network (23) broadcasts the encrypted contents and an encrypted channel key which differs with each broadcasting channel in one or more broadcasting channels, and the contract management server (21) distributes the limited key information to decrypt the encrypted channel key of the broadcasting channel for a certain period regardless of presence/absence of contract.

5. The contract management apparatus (11) according to claim 4, **characterized in that** the determination unit (202) recognizes one of first to fourth key information that corresponds to the distributed limited key information to determinate whether or not the consent to use of the contents be permitted based on a period or use of contents specified by the recognized key information in a case where the limited key information is at least one of the first key information capable of decrypting the encrypted channel key corresponding to a specific broadcasting channel in a specific time zone among the channel keys only in the specific time zone, the second key information capable of decrypting the encrypted channel key corresponding to a specific broadcasting channel on a specific day among the channel keys only on the specific day, the third key information capable of decrypting the encrypted channel key corresponding to a specific broadcasting channel for a specific week among the channel keys only for the specific week, and the fourth key information capable of decrypting the encrypted channel key corresponding to specific contents among the channel keys.

6. The contract management (11) apparatus according to claim 1, **characterized in that** the information generation unit (202) issues and successively adds a point corresponding to any of a value of the contents, a use time thereof, and a combination of them as the use situation information every time the decryption information is distributed; and
the determination unit (202) determinates whether or not the consent to use of the contents is permitted based on distribution of the decryption information after a total value of the points reaches an upper limit value determined beforehand by the contract information.

7. The contract management apparatus (11) according to claim 6, **characterized in that** the first acceptance unit (201) updates the upper limit value based on the contract information periodically distributed from the contract management server (21).

8. The contract management apparatus (11) according to claim 1, **characterized in that** the information generation unit (202) counts the number of receivers to which the decryption information has been distributed, and
the determination unit (202) determinates whether or not the consent to use of the contents is permitted based on distribution of the decryption information after the number reaches a maximum number determined beforehand by the contract information.

9. The contract management apparatus (11) according to claim 8, **characterized in that** the first acceptance unit (201) updates the maximum number based on the contract information periodically distributed from the contract management server (21).

10. A receiver (100 to 107) **characterized in that** the receiver (100 to 107) is used in the broadcasting system including the contract management apparatus (11) of claim 1, and comprises:
a first reception unit (101 to 106) configured to receive the encrypted contents from the broadcasting network (23);
a transmission unit (127) configured to transmit the request for decryption information to decrypt the encrypted contents to the contract management apparatus (11);
a second reception unit (127) configured to receive the decryption information sent from the contract management apparatus (11) in response to the request;
a memory (109, 112) in which the decryption information is stored; and
a decryption unit (107, 108) configured to decrypt the encrypted contents based on the decryption information.

11. A receiver (100 to 107) **characterized in that** the receiver is used in the broadcasting system including the contract management (11) apparatus of claim 2, and comprises:
a first reception (101 to 106) unit to configured to receive the encrypted contents and the encrypted key from the broadcasting network (23);
a transmission unit (127) configured to transmit the request for the key information to the contract management apparatus (11);
a second reception unit (127) configured to receive the key information sent from the contract management apparatus (11) in response to the request;
a memory (112) in which the key information is stored;
a first decryption unit (110) configured to decrypt the encrypted key based on the key information; and
a second decryption unit (107) configured to decrypt the encrypted contents based on the key decrypted by the first decryption unit (110).

12. A receiver (100 to 107) **characterized in that** the receiver (100 to 107) is used in the broadcasting system including the contract management apparatus (11) of claim 3, and comprises:
a first reception unit (101 to 106) configured to receive the encrypted contents from the broadcasting network (23);
a transmission unit (127) configured to transmit the request for a key to decrypt the encrypted contents to the contract management apparatus (11);
a second reception unit (127) configured to receive the key sent from the contract management apparatus (11) in response to the request;
a memory (112) in which the key is stored; and
a decryption unit (107) configured to decrypt the encrypted contents based on the key.

13. A receiver (100 to 107) **characterized in that** the receiver (100 to 107) is used in the broadcasting system including the contract management apparatus (11) of claim 4, and comprises:
a first reception unit (101 to 107) configured to receive the encrypted contents and the encrypted channel key from an optional broadcasting channel of the broadcasting network (23);
a transmission unit (127) configured to transmit the request for the limited key information to the contract management apparatus (11);
a second reception unit (127) configured to receive the limited key information from the contract management apparatus (11);
a first memory (112) in which the limited key information is stored;
a first decryption unit (110) configured to decrypt the encrypted channel key based on the limited key information; and
a second decryption unit (107) configured to decrypt the encrypted contents using the channel key decrypted by the first decryption unit (110).

14. The receiver (100 to 107) according to claim 13, **characterized in that** the limited key information is at least one of first key information capable of decrypting the encrypted channel key corresponding to a specific broadcasting channel in a specific time zone among the channel keys only in the specific time zone, second key information capable of decrypting the encrypted channel key corresponding to a specific broadcasting channel on a specific day among the channel keys only on the specific day, third key information capable of decrypting the encrypted channel key corresponding to a specific broadcasting channel for a specific week among the channel keys only for the specific week, and fourth key information capable of decrypting the encrypted channel key corresponding to specific contents among the channel keys.

15. A receiver (100 to 107) **characterized in that** the receiver (100 to 107) is used in the broadcasting system including the contract management apparatus (11) of any one of claims 11, 12 and 13, and comprises:
a second memory (109) in which a channel key is stored (111); and
a third decryption unit (107) configured to decrypt the encrypted contents using a channel key.

16. A contract management server (21) **characterized in that** the server (21) is used in the broadcasting system including the contract management apparatus (11) of any one of claims 2, 3 and 4, and comprises:
a storage unit (307) configured to store at least one of the key information, the key and the limited key information; and
a distribution unit (301) configured to distribute at least one of the key information to the one or more receivers (100 to 107) and the contract management apparatus (11).

17. A contract management server (21) **characterized in that** the server (21) is used in the broadcasting system including the contract management apparatus (11) of claim 6, and comprises:
a generation unit (308) configured to generate the contract information including an update value with respect to an upper limit value of the point total value, determined in accordance with a contract content concerning the use of the contents; and
a distribution unit (301) configured to periodically distribute the contract information to the contract management apparatus (11).

18. The contract management server (21) according to claim 16, **characterized by** further comprising:
a collection unit (301) configured to collect the use situation information from the contract management apparatus (11).

19. The contract management server (21) according to claim 18, **characterized in that** the collection unit (301) simultaneously collects an identifier of the contract management apparatus (11) and an identifier of the decryption information during collection of the use situation information.

20. A contract management server (21) **characterized in that** the server (21) is used in the broadcasting system including the contract management apparatus (11) of claim 9, and comprises:
a generation unit (308) configured to generate the contract information including an update value with respect to a maximum number of the receivers (100 to 107), determined in accordance with a contract content concerning the use of the contents; and
a distribution unit (301) configured to periodically distribute the contract information to the contract management apparatus (11).

21. An information providing method in which information is supplied to one or more contract management apparatuses including one or more receivers for reception of encrypted contents from a broadcasting network to manage use of the contents based on a contract content indicating that the use of the contents has been determined, the method **characterized by** comprising:
a first distribution step of individually distributing decryption information to decrypt the encrypted contents to the contract management apparatus in accordance with the contract content; and
a second distribution step of individually distributing contract information which defines use conditions of the decryption information to the contract management apparatus in accordance with the contract content.

22. The information providing method according to claim 21, **characterized in that** the second distribution step adds update information to update the upper limit value to the contract information, when the contract management apparatus issues and successively adds a point corresponding to at least any of a value of the contents to be decrypted by the decryption information, a use time, and a combination of them every time the decryption information is distributed to any of the one or more receivers, and stops distribution of the decryption information after a total value of the points reaches an upper limit value determined beforehand by the contract information.

23. The information providing method according to claim 22, **characterized in that** the second distribution step periodically distributes the contract information to which the update information to update the upper limit value of the total value of the points has been added.

24. The information providing method according to claim 21, **characterized in that** the second distribution step adds update information to update the upper limit value to the contract information, when the contract management apparatus counts the number of receivers to which the decryption information has been distributed, and determinates whether or not the consent to use of the contents is permitted based on distribution of the decryption information after the number reaches a maximum number determined beforehand by the contract information.

25. The information providing method according to claim 24, **characterized in that** the second distribution step periodically distributes the contract information to which the update information to update the upper limit value of the number of receivers has been added.

26. A contract management program which allows a computer to execute processing of a contract management apparatus for use in a broadcasting system including one or more receivers which receive encrypted contents from a broadcasting network, and a contract management server which manages use of the contents in accordance with a contract content, the contract management apparatus connected to the one or more receivers and the contract management server via separate networks, the program **characterized by** comprising:
a first acceptance step of accepting contract information including a consent to use of the contents, use conditions and decryption information distributed from the contract management server;
a first storage step of storing the contract information and the decryption information;
a second reception step of receiving a request for decryption information required to decrypt the encrypted contents, the request transmitted from at least one of the receivers;
a distribution step of distributing of the decryption information to the at least one of the receivers which requests the decryption information;
an information generation step of generating use situation information based on any of a value of the contents, a use time thereof, and a combination of them, the contents being decrypted by the distributed decryption information;
a second storage step of storing the use situation information;
a determination step of determining whether or not the consent to use of the contents is permitted based on the contract information and the use situation information in response to the request for the decryption information; and
a control step of controlling distribution of the decryption information by the distribution unit based on a determinate result of the determination step.

27. The contract management program according to claim 26, **characterized in that** the information generation step issues and successively adds a point corresponding to any of the value of the contents, the use time thereof, and the combination of them as the use situation information every time the decryption information is distributed; and the determination step determinates whether of not the consent to use of the contents is permitted based on distribution of the decryption information after a total value of the points reaches an upper limit value determined beforehand by the contract information.

28. The contract management program according to claim 27, **characterized in that** the first acceptance step updates the upper limit value of the total value of the points based on the contract information periodically distributed from the contract management server.

29. The contract management program according to claim 26, **characterized in that** the information generation step counts the number of receivers to which the decryption information has been distributed, and
the determination step determinates whether or not the consent to use of the contents is permitted based on distribution of the decryption information after the number reaches a maximum number determined beforehand by the contract information.

30. The contract management program according to claim 29, **characterized in that** the first acceptance step updates the upper limit value of the number of receivers based on the contract information periodically distributed from the contract management server.
